# EUROPÄISCHE PATENTSCHRIFT

(11) **EP 2 938 906 B1**
(45) Veröffentlichungstag und Bekanntmachung des Hinweises auf die Patenterteilung: **26.07.2017**
(21) Anmeldenummer: 13826839.6
(22) Anmeldetag: 20.12.2013
(51) Int. Cl.: F16H 55/18

(54) **GETEILTES ZAHNRAD**
DIVIDED TOOTHED WHEEL
ROUE DENTÉE EN PLUSIEURS PARTIES

(30) Priorität: 28.12.2012 DE 102012025210
(43) Veröffentlichungstag der Anmeldung: 04.11.2015
(73) Patentinhaber: GKN Sinter Metals Engineering GmbH, 42477 Radevormwald (DE)
(72) Erfinder: ZELLER, Andreas, 63584 Gründau (DE); REICH, Konstantin, 97877 Wertheim (DE); SCHUPP, Thomas, 57584 Scheuerfeld (DE)
(74) Vertreter: KNH Patentanwälte
(86) Internationale Anmeldenummer: PCT/EP2013/003897
(87) Internationale Veröffentlichungsnummer: WO 2014/101996

(56) Entgegenhaltungen:
- WO-A1-2005/090830
- WO-A1-2012/040762
- CN-A- 101 915 297

## Beschreibung

Die vorliegende Erfindung betrifft ein Zahnrad mit einer Ausgleichsfunktion eines Zahnflankenspiels bei kämmendem Eingriff mit einem zweiten Zahnrad mittels einer geteilten Verzahnung. So ein Zahnrad ist aus der CN101915297A bekannt.

Zahnradpaarungen werden oftmals theoretisch berechnet und weisen sodann in der theoretischen Auslegung kein Spiel zueinander auf. Aufgrund herstellungsbedingter Toleranzfelder entsteht allerdings in der Praxis ein Spiel zwischen kämmenden Verzahnungen von Zahnrädern. Zusätzliche, ein Spiel begünstigende Faktoren können durch Einbauungenauigkeiten der Zahnräder auf ihren jeweiligen Wellen, durch Weitergabe von Einbaufehlern und durch Toleranzmaße bei anderen, mit den Zahnrädern gekoppelten Komponenten sich addieren. Diese Faktoren können zum Beispiel Achswinkelfehler oder auch Abstandstoleranzen sein. Ein weiterer Einflußfaktor bezüglich eines Spiels zwischen kämmenden Flanken von Zahnrädern stellt sich durch variierende Betriebstemperaturen ein: durch Wärmeausdehnungen, insbesondere unterschiedliche Wärmeausdehnungskoeffizienten unterschiedlicher Werkstoffe, können Abstände sich ändern. Dieses betrifft Dehnungen innerhalb der miteinander kämmenden Zahnräder wie aber auch beispielsweise eine durch Wärmeausdehnung veränderte Position der Zahnradlagerung. Einerseits muss daher bei kämmenden Zahnrädern ein Spiel vorgesehen sein, um derartige Einflüsse ausgleichen zu können. Andererseits erzeugt ein Spiel zwischen den kämmenden Flanken eine Geräuschentwicklung, beispielsweise bei einem Flankenwechsel oder bei Nutzung mit nicht gleichförmig konstant zu übertragendem Drehmoment.

Um den oben genannten, beispielhaft genannten Einflussfaktoren Rechnung zu tragen, sind Zahnräder bekannt, die eine geteilte Verzahnung aufweisen. Derartige Zahnräder werden oftmals als sogenannte Zero-Backlash-Zahnräder oder "Scissor gear" bezeichnet. So geht beispielsweise aus der EP 2 161 478 B1 ein Zahnrad hervor, welches geteilt ist. Eine erste Zahnradhälfte und eine zweite Zahnradhälfte sind über eine dazwischen angeordnete Omega-Feder miteinander verspannt. Dadurch kann bei einem Kämmen mit einem zweiten Zahnrad immer eine Zahnflanke anliegen. Die beiden Zahnradhälften sind durch einen Sicherungsring axial zueinander gesichert. Aus der WO 2011/160153 A1 geht wiederum ein geteiltes Zahnrad hervor, bei dem eine Elastomerkomponente zwischen beiden Zahnradhälften angeordnet ist. Die Elastomerkomponente ist in der Lage, die beiden Zahnradhälften miteinander zu verspannen. Um beide Zahnradhälften zusammensetzen zu können, wird eine Arretierungshilfe eingesetzt. Aus der CN 101915297 geht ein geteiltes Zahnrad hervor, wobei eine Feder genutzt wird, die eine erste Zahnradhälfte mit einer zweiten Zahnradhälfte unter Spannung setzt. Beide Zahnradhälften können über eine Sicherungsstange hinsichtlich ihrer jeweiligen Teilverzahnung fluchtend fixiert werden. Ist das Zahnrad beispielsweise in einem Getriebe verbaut, wird die Sicherungsstange aus dem Zahnrad herausgenommen und die Feder kann die beiden Zahnradhälften unter Spannung setzen, so dass ein Anliegen von zumindest einer der beiden Zahnradhälften an dem gegenüberliegenden Zahnrad im Bereich der miteinander kämmenden Verzahnung des Getriebes sichergestellt ist.

Nachteil einer derartigen Fixierung der beiden Zahnradhälften ist, dass die Sicherungsstange beim Einbau aus dem Zahnrad herausgenommen werden muss. Fällt hierbei die Sicherungsstange in das Getriebe hinein, muss dieses gegebenenfalls zerlegt werden, damit bei einem späteren Betrieb des Getriebes durch die Sicherungsstange keine Schäden auftreten.

Aufgabe der vorliegenden Erfindung ist es, ein Zahnrad zur Verfügung zu stellen, welches einen derartigen Nachteil vermeidet.

Diese Aufgabe wird mit einem Zahnrad mit den Merkmalen des Anspruches 1 sowie mit einem Verfahren zum Einbau eines geteilten Zahnrads mit den Merkmalen des Anspruches 10 gelöst. Vorteilhafte weitere Ausgestaltungen und Merkmale gehen aus den jeweiligen Unteransprüchen wie auch aus der nachfolgenden Beschreibung und den Figuren jeweils näher hervor. Die vorgeschlagenen unabhängigen Ansprüche stellen jedoch nur einen ersten Vorschlag einer Formulierung des Erfindungsgegenstandes dar, ohne diesen jedoch beschränken zu wollen. Vielmehr besteht die Möglichkeit, dass ein oder mehrere Merkmale aus den jeweiligen unabhängigen Ansprüchen durch ein oder mehrere Merkmale der Offenbarung ergänzt oder auch ersetzt werden können.

Es wird ein Zahnrad mit einer Ausgleichsfunktion eines Zahnflankenspiels bei kämmendem Eingriff mit einem Zahnrad mittels einer geteilten Verzahnung vorgeschlagen, wobei das Zahnrad zumindest eine Teilung aufweist, entlang der eine erste Zahnradhälfte mit einem ersten Abschnitt der geteilten Verzahnung und eine zweite Zahnradhälfte mit einem zweiten Abschnitt der geteilten Verzahnung zueinander verdrehbar angeordnet sind, wobei eine Arretierung der Zahnradhälften zueinander mittels einer Verdrehsicherung vorgesehen ist, die aktiviert ein gegenseitiges Verdrehen der Zahnradhälften unterbindet, wobei bei aktivierter Verdrehsicherung der erste und der zweite Abschnitt der geteilten Verzahnung zueinander zumindest annähernd bündig übergehen, während bei einer nicht aktivierten Verdrehsicherung der erste und der zweite Abschnitt der geteilten Verzahnung versetzt zueinander angeordnet sind, wobei beide Abschnitte zueinander mittels eines federnden Elements verspannt sind, und die nicht aktive Verdrehsicherung bei Betrieb des Zahnrads im Zahnrad verbleibt.

Im Gegensatz zu der aus dem Stand der Technik bekannten Lehre, bei der eine Sicherung der beiden Zahnradhälften über die Sicherungsstange erfolgt, die aber aus dem Zahnrad herausgenommen werden muss, führt das Verbleiben der nicht aktiven Verdrehsicherung im Zahnrad dazu, dass ein Verlust der Verdrehsicherung beim Einbau des Zahnrades vermieden wird. Dadurch lassen sich Fehler bei einem Bau von beispielsweise Getrieben oder anderen Komponenten, bei denen ein derartiges Zahnrad zum Einsatz kommt, vermeiden.

Das Ausgleichen des Zahnflankenspiels kann vorzugsweise ausschließlich über die Wirkung des federnden Elements und der daraus resultierenden Verspannung der Zahnradhälften zueinander resultieren. Hierbei können technische Ausgestaltungen zum Einsatz kommen, wie sie im obigen Stand der Technik beschrieben sind. Es besteht jedoch ebenfalls die Möglichkeit, dass zumindest ein Teil der Verzahnung eine Beschichtung aufweist. Diese Beschichtung kann beispielsweise entfernbar sein. Derartiges geht z.B. aus der WO 2002/48575 hervor, auf die diesbezüglich verwiesen wird. Auch besteht die Möglichkeit, dass eine Beschichtung vorgesehen ist, die nicht entfernt wird, sondern vielmehr auf der Verzahnung verbleibt. Beispielsweise kann hierfür eine elastomere Gummierung genutzt werden, die eine ausreichend hohe Abriebsfestigkeit aufweist.

Bevorzugt besteht die Verzahnung des geteilten Zahnrades aus derjenigen des ersten Abschnittes und des zweiten Abschnittes. Des Weiteren besteht die Möglichkeit, dass das Zahnrad nicht nur ausschließlich eine erste und eine zweite Zahnradhälfte aufweist. Es besteht auch die Möglichkeit, dass das Zahnrad beispielsweise eine dritte Zahnradpartie aufweist, die beispielsweise ebenfalls einen Abschnitt der geteilten Verzahnung besitzt. Auch besteht die Möglichkeit, dass das Zahnrad in mehr Teile als nur die erste und die zweite Zahnradhälfte unterteilt ist, ohne dass deswegen neben dem ersten Abschnitt und dem zweiten Abschnitt der geteilten Verzahnung ein zusätzlicher Abschnitt der geteilten Verzahnung vorgesehen sein muss.

Das federnde Element wiederum, das bei der nicht aktivierten Verdrehsicherung zu dem Verspannen der beiden Abschnitte führt, wodurch die Ausgleichsfunktion des Zahnflankenspiels bei kämmendem Eingriff des Zahnrades mit dem zweiten Zahnrad erfolgt, kann gemäß einer Ausgestaltung ein einzelnes Element sein. Gemäß einer weiteren Ausgestaltung kann vorgesehen sein, dass mehrere federnde Elemente hierfür vorgesehen sind. Insbesondere können auch unterschiedlich beschaffene federnde Elemente zum Einsatz gelangen, beispielsweise bei Nutzung unterschiedlicher Federkräfte bei unterschiedlich wirkendem Moment. Vorzugsweise können auch technische Ausgestaltungen für ein federndes Element zum Einsatz kommen, wie sie aus dem obigen Stand der Technik bekannt sind und auf die hiermit verwiesen wird.

Ein Beispiel für die Nutzung eines speziellen federnden Elements sieht vor, dass beispielsweise zumindest eine Ringfeder oder auch eine Torsionsfeder eingesetzt wird. Diese kann beispielsweise um eine Achse des Zahnrads ein- oder mehrfach herum verlaufen. Beispielsweise kann sich ein Ende der Torsionsfeder an der ersten Zahnradhälfte abstützen, während ein anderes Ende der Torsionsfeder sich an der zweiten Zahnradhälfte abstützt. Wird beispielsweise ein weiteres Bauteil für das Zahnrad vorgesehen, kann alternativ wie aber auch zusätzlich ein Abstützen an diesem Bauteil vorgesehen sein. Beispielsweise besteht die Möglichkeit, dass die erste Zahnradhälfte sich gegenüber dieser beispielsweise feststehenden Bauteilkomponente mittels eines federnden Elementes abstützt, während die zweite Zahnradhälfte sich über ein zweites federndes Element ebenfalls an dieser feststehenden Bauteilkomponente abstützt. Im Ergebnis wird damit ebenfalls eine Verspannung vom ersten und zweiten Abschnitt der geteilten Verzahnung erzielt.

Das federnde Element kann gemäß einer Ausgestaltung beispielsweise eine Feder sein. Diese kann eine konstante Federkonstante aufweisen. Gemäß einer anderen Ausgestaltung ist beispielsweise vorgesehen, dass die Feder einen nichtlinearen Kraft-Weg-Zusammenhang besitzt. Vorzugsweise weist das federnde Element ein progressives Verhalten auf, das bedeutet, dass die Federkraft überproportional mit dem Weg zunimmt. Ebenso kann eine andere Ausgestaltung des federnden Elements ebenfalls jeweils derartige Eigenschaften aufweisen. Eine andere Ausgestaltung sieht beispielsweise vor, dass die Federkraft mit dem Weg abnimmt. Eine Ausbildung sieht zum Beispiel vor, dass die Federkraft mit dem Weg linear abnimmt. Eine weitere Ausbildung sieht vor, dass die Federkraft mit dem Weg ebenfalls geringer wird und zwar nicht-linear abnimmt. Eine Abnahme der Kraft kann zum Beispiel vorteilhaft für ein erstes härteres Abfangen von Drehmomentschwankungen zu einem nachfolgenden weicheren Übergang sein.

Eine weitere Ausgestaltung sieht wiederum vor, dass das federnde Element beispielsweise über einen ersten Weg ein lineares Federverhalten aufweist, hingegen über einen zweiten Wegabschnitt ein nichtlineares Verhalten besitzt. Hierdurch ist ermöglicht, dass bei beispielsweise langsamem Anfahren und dadurch geringer wirkendem Drehmoment das federnde Element nur im linearen Bereich gefordert ist. Wird hingegen zum Beispiel bei einem schnellen Beschleunigen ein sehr hohes Drehmoment sehr plötzlich übertragen, dient das nichtlineare Verhalten des federnden Elementes als Schutz und vermeidet ein gegebenenfalls ansonsten ungebremstes Aufprallen von Zahnflanken der miteinander kämmenden Zahnräder, was zu einer erheblichen Geräuscherzeugung beitragen kann. Hierbei kann die Federkraft mit dem Weg zunehmen oder auch abnehmen, je nach Ausgestaltung des federnden Elements.

Eine Ausgestaltung sieht vor, dass ein federndes Element zum Beispiel mittels eines elastomeren Materials gebildet wird. Auch kann das federnde Element eine Zugfeder oder auch eine Druckfeder bzw. ein entsprechend wirkendes federndes Element sein. Weiterhin kann das federnde Element auch ein Dämpfer sein. Ein Dämpfer im Sinne der Erfindung ist ein Element, welches in der Lage ist, ein Anschlagen einer Zahnflanke auf einer anderen Zahnflanke eines kämmenden Zahnrads zu dämpfen. Prinzipiell kann dieses durch einen entsprechend nachgiebigen elastischen Dämpfer erfolgen, der zusammengedrückt wird.

Eine weitere Ausgestaltung wiederum sieht vor, dass mehrere federnde Elemente vorgesehen sind, beispielsweise zumindest ein federndes Element, welches eine konstante Federkonstante und damit ein lineares Verhalten besitzt. Zum anderen ist zumindest ein zweites federndes Element vorgesehen, welches ein nichtlineares, besonders bevorzugt ein progressives Federverhalten besitzt. Beispielsweise kann ebenfalls vorgesehen sein, dass zumindest zwei federnde Elemente mit gleichen Eigenschaften vorgesehen sind. Zum Beispiel sind die federnden Elemente um 180° versetzt zueinander im Zahnrad angeordnet. Werden drei federnde Elemente bevorzugt mit gleichen Federeigenschaften eingesetzt, sind diese vorzugsweise jeweils um 120° versetzt zueinander im Zahnrad angeordnet. Bei vier federnden Elementen, die bevorzugt jeweils die gleiche Federcharakteristik besitzen, sind diese um 90° versetzt zueinander. Diese Reihe N=1, 2, 3, 4,... mit N=Anzahl der federnden Elemente wird bevorzugt in gleicher Weise fortgesetzt, das bedeutet, dass die federnden Elemente bevorzugt mit gleichem Winkelabstand zueinander versetzt im Zahnrad vorhanden sind. Eine weitere Ausgestaltung sieht dieses insbesondere auch für die Anordnung verschiedener federnder Elemente mit unterschiedlichen Federeigenschaften vor. Federnde Elemente mit gleichen Federeigenschaften sind hierbei gleichmäßig verteilt. Es besteht jedoch ebenfalls die Möglichkeit, dass mehrere federnde Elemente unterschiedlich versetzt zueinander im Zahnrad angeordnet sind.

Des Weiteren besteht die Möglichkeit, dass Gruppen von federnden Elementen gebildet werden, wobei bevorzugt jede Gruppe zumindest zwei federnde Elemente aufweist, die zueinander unterschiedliche Federeigenschaften besitzen. Die Anzahl der federnden Elemente wird beispielsweise durch den zur Verfügung stehenden Raum des Zahnrads mit beeinflusst. Ebenfalls können die zu übertragenden Lastverhältnisse als Einfluss auf die Auswahl der zu federnden Elemente herangezogen werden, insbesondere beispielsweise Erfahrungen in Bezug auf Lastwechselsituation und dabei ansonsten entstehende Geräusche bei nicht vorhandenem Anliegen der kämmenden Zahnräder.

Des Weiteren kann bei der Auswahl der federnden Elemente auch das verwendete Material für die federnden Elemente, die Art des federnden Elementes, die zu übertragende Kraft bzw. die entgegenzusetzende Kraft wie auch das zu übertragende Drehmoment eine Rolle spielen. Gleiches gilt auch für das verwendete Material des Zahnrades selbst und die sich gegebenenfalls daraus ergebenden konstruktiven Freiheiten oder aber Beschränkungen, insbesondere in Bezug auf eine Abstützung des jeweiligen federnden Elementes mit einem ersten und einem zweiten Ende. Neben einer Anordnung von mehreren federnden Elementen entlang eines gleichen Radius um eine Drehachse besteht ebenfalls die Möglichkeit, ein oder mehrere federnde Elemente mit unterschiedlichem Radius versetzt wie auch unversetzt zueinander um die Drehachse herum anzuordnen.

Im Folgenden wird auf die Verdrehsicherung wie auch auf unterschiedliche Ausgestaltungen und Aspekte der Verdrehsicherung eingegangen:
Das Verbleiben der Verdrehsicherung in dem Zahnrad auch während des Betriebs erlaubt einen Einbau des aus einzelnen Teilen bestehenden, fertig zusammengesetzten Zahnrads im gesicherten Zustand. Die Verdrehsicherung wird vorzugsweise während des Zusammensetzens des Zahnrads miteingesetzt. Gemäß einer anderen Ausgestaltung wird die Verdrehsicherung zum Teil während des Zusammensetzens miteinagesetzt, während ein anderer Teil der Verdrehsicherung nachträglich montiert wird. Dieses kann beispielsweise ein Einsetzen in das Zahnrad sein. Auch kann ein Teil der Verdrehsicherung auf das Zahnrad aufgesetzt werden. Beispielweise kann die Verdrehsicherung auch teilbar sein. So kann beispielsweise ein Teil in dem Zahnrad verbleiben, während ein anderer Teil aus dem Zahnrad herausgenommen werden kann.

Es ist zum Beispiel vorgesehen, dass bei aktivierter Verdrehsicherung der erste und der zweite Abschnitt der geteilten Verzahnung vorzugsweise vollständig bündig ineinander übergehen. Dieses erlaubt, dass ein Einsetzen des Zahnrades ohne Rücksichtnahme auf einen ansonsten vorhandenen Versatz des ersten und des zweiten Abschnittes der geteilten Verzahnung zueinander erfolgen kann. Eine weitere Ausgestaltung sieht vor, dass ein gewisser Versatz möglich ist. Dieser Versatz kann sich beispielsweise durch die Herstellungsgenauigkeit ergeben. Eine andere Ausgestaltung sieht beispielsweise vor, dass durch eine Beschichtung auf nur einer Seite der Verzahnung, beispielsweise bei nur einem der beiden Abschnitte, sich ebenfalls ein Versatz einstellen kann. Wiederum eine andere Ausgestaltung sieht beispielsweise vor, dass der erste und der zweite Abschnitt der geteilten Verzahnung einen geringen Versatz zueinander aufweisen. Dieser Versatz ist jedoch geringer als derjenige, der sich bei nicht aktivierter Verdrehsicherung bezüglich des ersten und des zweiten Abschnitts der geteilten Verzahnung ergibt. Diese verschiedenen Ausgestaltungen, bei denen ein geringer Versatz vorgesehen sein kann, sind unter der Beschreibung eines annähernd bündigen Übergangs zwischen dem ersten und dem zweiten Abschnitt zu verstehen.

Des Weiteren ist bevorzugt vorgesehen, dass die Arretierung der Zahnradhälften zueinander mittels einer Verdrehsicherung erfolgt, die zerstörungsfrei lösbar ist. Auf diese Weise wird vermieden, dass beispielsweise Materialbruchstücke beim Einbau des Zahnrades entstehen und gegebenenfalls zu einem Schaden beispielsweise in einem Getriebe führen können.

Bevorzugt ist die Verdrehsicherung wiederholbar aktivierbar. Hierzu ist beispielsweise vorgesehen, dass die Verdrehsicherung eine erste Position wie auch eine zweite Position aufweist, die bevorzugt jeweils eine Endposition darstellen. Während die erste Position beispielsweise mit einer aktivierten Verdrehsicherung mit Arretierung der Zahnradhälften einhergeht, ist beispielsweise die zweite Position derart, dass die Verdrehsicherung nicht aktiviert ist, vielmehr der erste und der zweite Abschnitt der geteilten Verzahnung zueinander mittels eines federnden Elementes verspannt sind. Die erste Position und die zweite Position sind jeweils bevorzugt im Zahnrad selbst angeordnet. Besonders bevorzugt ist, dass die Verdrehsicherung selbst beispielsweise nicht über eine Außenfläche des Zahnrades hinausragt. Gemäß einer anderen, weiteren Ausgestaltung wiederum ist vorgesehen, dass nur bei einer der beiden Positionen die Verdrehsicherung teilweise aus einer Oberfläche des Zahnrades hinausragt. Dies ist bevorzugt, wenn beispielsweise ohne ein Werkzeug eine Positionsänderung der Verdrehsicherung nach erfolgtem Einbau durch äußere Betätigung, insbesondere mittels Handbetätigung erfolgt. Auch besteht die Möglichkeit, dass ein Werkzeug zur Positionsänderung genutzt wird, bevorzugt ein Handwerkzeug, zum Beispiel eine Zange. Es kann auch ein automatisiert betriebenes Werkzeug zum Einsatz kommen, ebenso auch durch Druckaufprägung die Positionsänderung generiert wird. Beispielsweise kann ein herausragendes Teil eingepresst werden, gezogen werden, umgeschwenkt werden oder in sonstiger Weise von Außen kraft- und/oder formschlüssig betätigt werden.

Eine Wiederholbarkeit der Aktivierung bzw. der Deaktivierung erlaubt zum Beispiel, dass ein beispielsweise einmal eingebautes Zahnrad auch wieder ausgebaut werden kann, anschließend wieder in einen Einbauzustand rückversetzt werden kann, um sodann wiederum aufs neue eingesetzt zu werden. Dieses Vorgehen erlaubt beispielsweise, dass bei einem Auseinandernehmen eines Getriebes und Ersatz von einem Getrieberad andere Getrieberäder, die von einer derartigen Reparatur nicht betroffen sind, jedoch als geteilte Zahnräder vorliegen, wieder eingesetzt werden können, und zwar in einem arretierten Zustand, in dem sie auch vorher montiert worden waren. Auf diese Weise kann sichergestellt werden, dass ein einmal eingesetztes Zahnrad auch von der Welle gelöst und anschließend auf die gleiche oder aber auf eine andere, insbesondere Austauschwelle aufgesetzt und in den Einbauort wiederverbracht wird, wobei die Zahnradhälften zueinander arretiert sind.

Auch besteht die Möglichkeit, eine weitere Arretierung der beiden Zahnradhälften, nämlich nach erfolgtem Verspannen der beiden Zahnradhälften, vorzusehen. Durch die in dem verspannten Zustand erfolgte Arretierung kann das geteilte Zahnrad von der Welle heruntergenommen werden, ohne dass die beiden Zahnradhälften sich noch weiter relativ zueinander verdrehen können. Diese weitere Arretierung kann beispielsweise mit der Verdrehsicherung erfolgen. Es besteht jedoch ebenfalls eine Möglichkeit, eine zur Verdrehsicherung zusätzliche Arretierungskomponente vorzusehen, die derartiges ermöglicht.

Neben einer Ausgestaltung, bei der eine erste und eine zweite Position, bevorzugt jeweils als Endposition, vorgesehen sind, besteht des Weiteren die Möglichkeit, dass zumindest eine weitere Position der Verdrehsicherung als zum Beispiel Zwischenstellung möglich ist. Beispielsweise kann diese Zwischenstellung die Arretierung der Zahnradhälften nach erfolgter Verspannung bewirken.

Gemäß einer Ausgestaltung ist in dem Zahnrad eine einzelne Verdrehsicherung vorgesehen. Gemäß einer weiteren Ausgestaltung sind zwei oder mehr Verdrehsicherungen vorgesehen. Beispielsweise besteht die Möglichkeit, dass zwei oder mehr Verdrehsicherungen miteinander gekoppelt sind. So kann beispielsweise eine gemeinsame Aktivierung wie auch Deaktivierung vorgesehen sein.

Die Verdrehsicherung ist zum Beispiel eine im Zahnrad angeordnete Komponente, die in einer ersten Position ein Verdrehen der Zahnradhälften zueinander sperrt und in einer zweiten Position ein Verdrehen ermöglicht, wobei zumindest in der zweiten Position die Komponente unter Spannung steht. Die Spannung kann beispielsweise konstant während des Betriebs sein. Sie kann sich aber auch ändern. Auch kann die Ursache für die Erzeugung der Spannung unterschiedlich sein. Gemäß einer Ausgestaltung ist beispielsweise vorgesehen, dass die Verdrehsicherung und das federnde Element ein Bauteil sind. Bei dieser Ausgestaltung ist beispielsweise vorgesehen, dass durch das federnde Element selbst die Spannung erzeugt wird. Eine weitere Ausgestaltung sieht vor, dass die Komponente durch ein anderes Element, welches ebenfalls beispielsweise federnde Eigenschaften aufweist, unter Spannung gesetzt werden kann.

Eine weitere Ausgestaltung sieht vor, dass nur eine Komponente vorgesehen ist, die eine Fixierung der beiden Zahnradhälften zueinander direkt oder indirekt ermöglicht, auch wenn mehrere federnde Elemente vorgesehen sind. So kann gemäß einer Ausgestaltung vorgesehen sein, dass nur eine oder aber zwei federnde Elemente als Verdrehsicherung ausgestaltet sind, andere federnde Elemente hingegen ausschließlich zum Ausgleichen des Zahnflankenspiels bei kämmendem Eingriff mit dem zweiten Zahnrad eingesetzt werden.

Eine weitere Ausgestaltung sieht beispielsweise vor, dass die als Verdrehsicherung im Zahnrad angeordnete Komponente dadurch unter Spannung gesetzt wird, dass sie von einer ersten in eine zweite Position verschoben wurde. Beispielsweise kann vorgesehen sein, dass die Komponente im Zahnrad in einer ersten Position unter geringerer Spannung steht als in der zweiten Position, in der die Verdrehsicherung nicht aktiviert ist. Beispielsweise können in der ersten und in der zweiten Position auch unterschiedliche Ursachen für die Spannungserzeugung vorliegen. Des Weiteren besteht die Möglichkeit, dass unterschiedliche Ursachen zur Spannungserzeugung in einer der Positionen genutzt werden. Beispielsweise kann vorgesehen werden, dass in der aktivierten ersten Position der Verdrehsicherung und damit der zugehörigen Komponente diese einerseits durch das federnde Element mit einer Spannung beaufschlagt ist. Zum anderen kann die Komponente durch das sie umgebende Material des Zahnrades ebenfalls mit Spannung beaufschlagt werden. So kann zum Beispiel durch Verwendung einer Spielpassung und/oder einer Presspassung, in der die Komponente beispielweise angeordnet ist, ebenfalls eine Spannung generiert werden. So kann zum Beispiel in der zweiten Position der Komponente eine Spannung dadurch erzeugt werden, dass ausschließlich eine Presspassung wirkt, wobei die Komponente von der aktivierten in die nicht aktivierte Position zu verschieben ist, damit diese Spannung erzeugt wird. Gleichzeitig kann diese Presspassung eine derartige Spannung erzeugen, dass die Komponente im Betrieb des Zahnrades an ihrem Ort verbleibt. Bevorzugt wird sie durch die erzeugte Spannung der Presspassung in der nicht aktivierten Position gesichert, so dass im Betrieb die nicht aktivierte Verdrehsicherung nicht unbeabsichtigt in eine aktivierte Position gelangen kann.

Eine Weiterbildung sieht vor, dass die beispielweise nur auf einen Teil der Komponente der Verdrehsicherung eine Presspassung einwirkt. Auch besteht die Möglichkeit, dass über eine Spielpassung die Komponente in eine Presspassung überführt werden kann. Auch kann beispielweise vorgesehen sein, dass die Komponente in zwei Presspassungen eingeschoben wird, wobei zum Beispiel eine erste Presspassung in der ersten Zahnradhälfte und die zweite Presspassung in der zweiten Zahnradhälfte angeordnet ist.

Eine weitere Ausgestaltung sieht vor, dass die erste und die zweite Zahnradhälfte jeweils eine in Überdeckung bringbare Führung aufweisen, in die eine bewegbar angeordnete Sperrkomponente eingesetzt ist, die als Verdrehsicherung fungiert. Eine Ausgestaltung sieht beispielweise vor, dass die Sperrkomponente entlang einer Führung bewegbar ist. Die Sperrkomponente wiederum ist in einem Bereich der Führung vorzugsweise angeordnet, der bei normalem Betrieb des Zahnrades beispielweise in einem Getriebe nicht erreicht wird.

Beispielsweise kann die Führung in Form einer Aussparung bei der ersten wie auch bei der zweiten Zahnradhälfte vorliegen. Werden diese in Überdeckung gebracht, kann beispielsweise die Sperrkomponente dort eingesetzt werden und dadurch beispielsweise ein gegeneinander Verdrehen von erster und zweiter Zahnradhälfte blockieren. Beispielsweise kann eine Sicherung der Sperrkomponente durch das Vorsehen von zumindest einer Presspassung erfolgen. Eine weitere Ausgestaltung sieht beispielsweise vor, dass die Führung der ersten Zahnradhälfte und die Führung der zweiten Zahnradhälfte in fluchtende Übereinstimmung gebracht werden. Ist die Flucht passgenau eingestellt, kann wiederum die Sperrkomponente dort eingesetzt werden und verriegelt dadurch die erste und die zweite Zahnradhälfte miteinander. Wiederum eine andere Ausgestaltung sieht beispielsweise vor, dass eine erste Führung in der ersten Zahnradhälfte und eine zweite Führung in der zweiten Zahnradhälfte unterschiedlich gestaltet sind. Sie können beispielsweise dazu dienen, einen Pfad zu definieren, entlang dessen die Sperrkomponente geführt wird. Eine der beiden Führungen kann sodann auch eine Sperre aufweisen, zum Beispiel durch die Gestaltung eines Absatzes. Wird beispielsweise die Sperrkomponente über diesen Absatz hinaus geführt, kann die Sperrkomponente beispielsweise auch ihre Position nicht nur entlang des Umfanges sondern auch in Axialrichtung betrachtet ändern.

Die Führung ist vorzugsweise radial umlaufend um die Drehachse des Zahnrads angeordnet. Die Führung kann jedoch ebenfalls mit sich änderndem radialen Abstand zur Drehachse des Zahnrades angeordnet sein. Insbesondere ist die Führung innerhalb des Zahnrades verlaufend und vorzugsweise durch die jeweiligen Zahnradhälften abgedeckt. Auch kann vorgesehen sein, dass die Führung nur in einer Zahnradhälfte angeordnet ist. Vorzugsweise ist die Führung vollständig abgedeckt. Dieses verhindert, dass von Außen vom Zahnrad her sich beispielsweise kleine Partikel festsetzen können und dadurch eine Agglomeration dieser Partikel sich aufbauen kann, die zu einer Störung in der Führung führt. Eine andere Ausgestaltung sieht beispielsweise vor, dass die Führung zumindest eine Öffnung aufweist. Im Rahmen eines Zuganges über diese Öffnung nach Außen kann beispielsweise die Sperrkomponente mit einem angepassten Werkzeug betätigt werden. So kann sie beispielsweise von Außen in oder aus einer Sperrposition herausgebracht werden.

Vorzugsweise ist vorgesehen, dass sich eine Sperrung einer Beweglichkeit zwischen der ersten und der zweiten Zahnradhälfte zum Beispiel auch automatisch einstellen lassen kann, beispielsweise durch ein relatives Verdrehen beider Zahnradhälfte zueinander, bis die Sperrkomponente wirksam ist. Ist hingegen die Sperrung aufgehoben, kann diese vorzugsweise nicht wieder ohne Weiteres eingerichtet werden. Vorteilhafterweise kann dieses nur durch Eingriff von Außen erfolgen, beispielsweise mit einem dafür vorgesehenen Werkzeug. Dadurch wird verhindert, dass während des Betriebes durch die einwirkenden Kräfte und Momente beide Zahnradhälften in eine derartige Konstellation gebracht werden, dass die Sperrung der Beweglichkeit beider Zahnradhälften zueinander automatisch blockiert werden würde.

Die Sperrkomponente kann beispielsweise ein Bolzen, eine Klinke, ein Stift, ein Kragen, ein Bestandteil der federnden Komponente und/oder auch eine Verrastung sein, die vorzugsweise jeweils innerhalb des Zahnrades angeordnet ist. Diese Aufzählung ist nur beispielhaft, ohne abschließend zu sein.

Eine Ausgestaltung sieht beispielsweise vor, dass als federndes Element eine Schenkelfeder im Zahnrad angeordnet ist, die als Verdrehsicherung wie auch als die beiden Zahnradhälften miteinander verspannende Komponente dient. So kann zum Beispiel ein Ende der Schenkelfeder beispielsweise abgewinkelt sein. Wird der abgewinkelte Arm beispielsweise dazu genutzt, in zwei Bauteile des Zahnrades zum Beispiel in die erste wie auch in die zweite Zahnradhälfte bzw. in eine der Zahnradhälften und eine zusätzliche Komponente einzugreifen, blockiert dadurch die Verdrehmöglichkeit zum Beispiel der beiden Zahnradhälften zueinander. Wird der abgewinkelte Arm soweit wieder aus eine der Komponenten herausgenommen, führt das zur Aufhebung der Sperrung. Ein gegenseitiges Verspannen durch das federnde Element bleibt beispielsweise dadurch erhalten, dass eine weitere Kopplung mit derjenigen Zahnradhälfte bzw. zusätzlichen Komponente vorliegt, die erhalten bleibt, auch wenn das beispielsweise eine Ende herausgenommen wird und die Verdrehsicherung damit nicht mehr aktiv ist. Durch die Kopplung bleibt die Kraftübertragung und damit das Aufrechterhalten einer Verspannung gesichert. Ein Verdrehen der ersten und der zweiten Zahnradhälfte ist dann wieder möglich. Eine weitere Ausgestaltung sieht beispielsweise vor, dass anstelle einer vollständigen Herausnahme beispielsweise ein Ende des federnden Elementes innerhalb der Zahnradhälfte bzw. der zusätzlichen Komponente versetzt wird. Während in einer ersten Lage beispielsweise des einen Endes des federnden Elements dieses die Relativbewegung zwischen den zu verdrehenden Komponenten des geteilten Zahnrades blockiert, wird in einer zweiten Lage des Endes die Relativbewegung freigegeben.

Bevorzugt ist vorgesehen, dass die erste und die zweite Zahnradhälfte jeweils eine in Überdeckung bringbare Führung aufweisen, die Verdrehsicherung einen abgewinkelten Arm aufweist, der in beide Führungen gleichzeitig einsetzbar ist und dadurch die Verdrehsicherung aktiviert. Beispielsweise kann der abgewinkelte Arm von dem federnden Element stammen und die beiden Führungen jeweils unterschiedliche Geometrien aufweisen. Hierbei kann die Geometrie einer der beiden Führungen soweit ausgestaltet sein, dass sie eine Sperre für den angewinkelten Arm bildet.

Ein abgewinkelter Arm oder eine sonstige Gestalt, die entlang einer Führung geführt wird und sperrt bzw. arretiert, kann aber nicht nur bei einer Schenkelfeder sondern auch bei einem anderen federnden Element bzw. der Verdrehsicherung entsprechend vorgesehen sein.

Eine Ausgestaltung sieht zum Beispiel vor, dass eine Schenkelfeder genutzt wird, die ein erstes Ende und ein zweites Ende aufweist. Während das eine Ende fest mit einer der beiden Zahnradhälften verbunden ist, kann das zweite Ende entlang einer Führung geführt und zu einer Arretierung beider Zahnradhälften zueinander genutzt werden. Eine Weiterbildung sieht vor, dass das zweite Ende entlang einer Führung mit zumindest einer ersten Ebene und einer zweiten Ebene geführt wird. So kann zum Beispiel das zweite Ende sich direkt auf der ersten Ebene abstützen und bei Bewegung entlang der Führung sich dann auf der zweiten Ebene abstützen. Die erste Ebene ist zu der zweiten Ebene vorzugsweise versetzt, vorzugsweise höhenversetzt, insbesondere zum Beispiel bezogen auf eine Wellenachse axial versetzt. Beispielweise können die Ebenen parallel zueinander verlaufen. Sie können aber auch geneigt zueinander angeordnet sein. Bevorzugt ist zwischen der ersten und der zweiten Ebene ein Höhenunterschied, vorzugsweise eine Stufe angeordnet. Der Höhenunterschied, insbesondere die Stufe, kann als Sperre dienen. Dadurch kann zum Beispiel das zweite Ende in einer Lage arretiert werden, wodurch die beiden Zahnradhälften entweder zueinander ebenfalls arretiert werden oder aber unter Spannung gesetzt werden, um relativ zueinander beweglich zum Spielausgleich miteinander gekoppelt zu sein.

Eine weitere bevorzugte Ausgestaltung sieht vor, dass die Verdrehsicherung eine verschiebbare Sperrkomponente aufweist, beispielweise einen verschiebbaren Sperrbolzen bzw. Sperrstift umfasst. Der verschiebbare Sperrbolzen ist innerhalb des Zahnrades angeordnet. Bei einem Zusammenbau des Zahnrades mit der ersten und der zweiten Zahnradhälfte wird der verschiebbare Sperrbolzen mit eingesetzt. Gegen ein Herausfallen wird der Sperrbolzen vorzugsweise durch eine entsprechende Geometrie der ersten bzw. zweiten Zahnradhälfte und des Sperrbolzens gesichert. Eine Ausgestaltung sieht hierbei vor, dass der Sperrbolzen nach Außen hin zumindest teilweise mit seiner jeweiligen Stirnfläche durch die beiden Stirnradhälften abgedeckt ist. Ist die Verschiebbarkeit des Sperrbolzens in axialer Richtung parallel zur Drehachse des Zahnrades vorgesehen, genügt es beispielsweise, dass von Außen auf den Sperrbolzen beispielsweise durch einen Stift ein Druck aufgebracht werden kann, der zu einer Verschiebung des Sperrbolzen führt. Hierfür ist beispielsweise eine entsprechende Öffnung in einer Außenfläche des Zahnrades vorgesehen.

Der Sperrbolzen kann gemäß einer Ausgestaltung beispielsweise federbelastet sein. Diese ermöglicht, dass bei einer fluchtenden Übereinstimmung von einer ersten und einer zweiten Führung, die jeweils in den zu sperrenden Komponenten des Zahnrades angeordnet sind, eine selbsttätige Sperre ermöglicht ist. Eine weitere Ausgestaltung sieht beispielsweise vor, dass der Sperrbolzen solange beide Komponenten zueinander sperrt, bis er von außen in eine entsprechend angepasst dimensionierte Öffnung hineingedrückt wird. Dort verbleibt er, beispielsweise durch eine entsprechende Presspassung und/oder Verriegelung und/oder aufgebrachte Federkraft. Eine Weiterbildung sieht beispielsweise vor, dass der Sperrbolzen auch aus der Sperrposition bevorzugt von außen wieder in eine Freigabeposition gebracht werden kann. Beispielsweise kann dieses durch eine weitere Öffnung im Zahnrad erfolgen.

Die Verschiebbarkeit des Sperrbolzens kann jedoch nicht nur in axialer Richtung parallel zur Drehachse des Zahnrades vorgesehen sein. Eine andere Ausgestaltung sieht vor, dass der Sperrbolzen bzw. ein Sperrkörper auch in radialer Richtung verschiebbar angeordnet sein kann. Eine andere Ausgestaltung wiederum sieht vor, dass ein Sperrkörper auch parallel zum Umfang des Zahnrades innerhalb des Zahnrades verschiebbar angeordnet sein kann. So kann der Sperrkörper auch eine andere Form als eine Bolzenform aufweisen. Andere Gestaltungen des Sperrkörpers wie beispielsweise eine Kugel, ein Zylinder, eine Kegelform, insbesondere ein Kegelstumpf wie auch Mischungen davon sind ebenfalls möglich. Ebenfalls besteht die Möglichkeit, dass mehrere Sperrkörper vorhanden sind. Auch können unterschiedliche Sperrkörper zum Einsatz kommen.

Gemäß einem weiteren Gedanken der Erfindung, der auch unabhängig von der oben beschriebenen Ausgestaltung des Zahnrades mit einer Ausgleichsfunktion eines Zahnflankenspiels bei kämmendem Eingriff mit einem zweiten Zahnrad mittels einer geteilten Verzahnung vorgesehen sein kann, ist ein Verfahren zum Einbau eines geteilten Zahnrades wie nachfolgend beschrieben vorgesehen. Vorzugsweise wird dieses Verfahren zum Einbau mit dem oben beschriebenen Zahnrad ausgeführt. Das Verfahren sieht vor, dass zum Einbau eine erste und eine zweite Zahnradhälfte des geteilten Zahnrades mit jeweiligen Abschnitten einer geteilten Verzahnung verdrehsicher zueinander arretiert werden, nach dem Einbau eine Arretierung der beiden Zahnradhälften gelöst wird und die beiden Zahnradhälften beweglich zueinander unter Spannung stehen, wobei eine die Arretierung bewirkende Komponente nach Lösen der Arretierung im Zahnrad verbleibt. Eine derartige Vorgehensweise hat den Vorteil, dass das an und für sich geteilte Zahnrad so behandelt werden kann wie ein ungeteiltes Zahnrad. Das erleichtert den Einbau. Des Weiteren muss bei dem Einbau nicht darauf geachtet werden, dass die eventuell genutzte Sperrkomponente nicht als loses Teil gegebenenfalls den Zusammenbauprozess stört. Vielmehr muss hierauf keinerlei Rücksicht genommen werden. Bevorzugt ist vorgesehen, dass von außen das Zahnrad angegriffen wird und die Arretierung bewirkende Komponente versetzt wird, wodurch die Arretierung gelöst wird. Dazu kann beispielsweise ein Werkzeug genutzt werden. Das Werkzeug kann beispielsweise auf die die Arretierung bewirkende Komponente drücken, dadurch zum Beispiel eine Bewegung, vorzugsweise ein Verschieben der Komponente bewirken, wodurch die Arretierung aufgehoben wird. Bevorzugt wird durch das Verfahren die die sperrbewirkende Komponente nicht nur in eine Freigabeposition gebracht. Vielmehr kann hierbei die Komponente auch in eine Sicherungsposition gebracht werden, die innerhalb des Zahnrades vorgesehen ist. Diese Sicherungsposition verhindert, dass die Komponente sich aus dieser Sicherungsposition unfreiwillig wieder löst und damit beispielsweise eine unbeabsichtigte Arretierung auslöst.

Eine Ausgestaltung sieht beispielsweise vor, dass ein Schraubendreher oder ein sonstiges längliches Werkzeug eingesetzt wird, welches in eine Öffnung an einer Oberfläche des Zahnrades eingeführt wird. Dadurch kann beispielsweise ein axialer Druck auf die Komponente ausgeübt werden und diese axial verschoben werden. Eine andere Ausgestaltung sieht beispielsweise vor, dass ein Verschieben entlang einer Umfangsrichtung des Zahnrades erfolgt. Wiederum eine andere Ausgestaltung sieht beispielsweise vor, dass ein Schalter an der Oberfläche des Zahnrades betätigt wird, wodurch die Sperrkomponente aus der Arretierungsposition in die Freigabeposition gebracht wird.

Bevorzugt wird als Material für das Zahnrad ein metallischer Werkstoff eingesetzt. Dieses kann beispielweise eine Metalllegierung sein, wobei das Zahnrad aus dem Vollen hergestellt wird. Auch kann ein Kunststoff genutzt werden, um das Zahnrad her-zustellen. Das Zahnrad oder auch Komponenten davon sind beispielweise im Spritzgußverfahren herstellbar. Auch können einzelne Komponenten des Zahnrads aus jeweils unterschiedlichen Materialien hergestellt sein. Auch kann ein Sintermaterial zum Einsatz kommen, vorzugsweise, wenn es um spezielle Konturen geht, die in einer oder beiden Zahnradhälften vorliegen sollen. Auch kann zum Beispiel ein Pulverspritzgießen, abgekürzt PIM für Powder Injection Molding, genutzt werden. Beim PIM wird ein mit einem Binder versehenes Metall- , dann abgekürzt MIM für Metal Injection Molding oder Keramikpulver, dann abgekürzt CIM: Ceramic Injection Molding in einem Spritzgußprozess verarbeitet. Der Binder wird anschließend entfernt. Hierdurch ist es möglich, komplex geformte Zahnradhälften in größeren Stückzahlen mit sehr geringen Toleranzen herzustellen.

Für das Spritzgießen von Metall- und/oder Keramikpulver können alle verschiedenste sinterfähige Pulver mit geeigneter Korngröße eingesetzt werden, wie beispielsweise Oxid-, Silikat- und Nitridkeramiken, Carbide, transluzente Keramik, Metalle sowie Metalllegierungen, darunter auch Edelmetalle. Diese können als Basismaterial eingesetzt werden. Durch Einstellung einer Mischung aus verschiedenen Pulvern verschiedener Materialien und/oder Korngrößenverteilungen kann auf die Eigenschaften des Zahnrads in Bezug auf dessen spätere Verwendung gezielt Einfluss genommen werden. Damit können Faktoren wie Festigkeit, Zähigkeit, Oberflächenbeschaffenheit, Korrosionsfestigkeit und anderes miteingestellt werden. Bei der Herstellung von Pulverspritzgießmassen können unterschiedliche Bindersysteme zum Einsatz kommen. Bevorzugt sind Binder, die zum Beispiel wasserlöslich und biologisch abbaubar sind, beispielsweise Polyalkohole oder Polyvinylalkohole. Je nach verwendetem Binder können unterschiedliche Entbinderungsprozesse zum Einsatz gelangen, vorzugsweise thermische, katalytische und/oder Lösungsmittelentbinderung, beispielsweise mit Wasser oder Aceton. Das Braunteil bzw. Weißteil kann anschließend gesintert werden.

Die einzelnen Komponenten des Zahnrads, zum Beispiel die erste und/oder die zweite Zahnradhälfte oder auch das zusammengesetzte Zahnrad, können auf unterschiedliche Weise zusätzlich bearbeitet sein. So kann beispielweise zumindest teilweise ein Oberflächenfinish vorgesehen sein, zum Beispiel ein Sandstrahlen, Gleitschleifen, Polieren oder auch Läppen. Auch besteht die Möglichkeit, eine Beschichtung vorzusehen, zum Beispiel zur Erhöhung des Verschleißschutzes. Die Beschichtung kann beispielsweise mittels Dünnschichttechnologie, mittels Galvanisieren oder auch Lackieren aufgebracht werden. Daneben besteht auch die Möglichkeit, eine Wärmebehandlung vorzusehen zum Beispiel ein Einsatzhärten, ein Heiß-Isostatisches Pressen oder anderes. Auch kann eine spanende Bearbeitung vorgesehen sein, zum Beispiel Drehen Fräsen, Bohren, Schleifen, Reiben, Honen und/oder Gewindebohren. Ebenfalls besteht die Möglichkeit, dass eine hohe Genauigkeit durch ein Kalibrieren erfolgt.

Bevorzugt ist ein Herstellen der einzelnen Komponenten des Zahnrads derart, dass eine Nachbearbeitung einzelner Komponenten entfällt. Hingegen kann es aus Genauigkeitsgründen notwendig sein, beispielweise ein einmaliges Bearbeiten des zusammengesetzten Zahnrads vorzusehen.

Weiterhin ist es bevorzugt, dass das zusammengesetzte Zahnrad zumindest weitestgehend automatisiert herstellbar ist. So können die erste und die zweite Zahnradhälfte durch automatische Herstellungszentren gefertigt und sodann nachfolgend mittels einer Montagestraße zusammengesetzt werden. Hierbei können die ein oder mehrere Komponenten umfassenden, im Zahnrad angeordneten Elemente ebenfalls bevorzugt automatisiert eingesetzt werden, so zum Beispiel die Verdrehsicherung wie auch das oder die federnde Elemente. Eine Ausgestaltung sieht vor, dass zum Zusammensetzen des Zahnrads die notwendigen Bauteile vorgefertigt und aus einem Lager der automatisierten Montage zugeführt werden. Eine andere Ausgestaltung sieht vor, dass auch die Bauteile parallel zu der Montage hergestellt und direkt zum Zusammensetzen zugeführt werden.

Weitere vorteilhafte Ausgestaltungen, Merkmale und Weiterbildungen gehen aus den nachfolgenden Figuren hervor. Diese sind nur beispielhafte Ausgestaltungen zur Verdeutlichung der Erfindung, ohne aber diese beschränken zu wollen. Auch sind die in einzelnen Ausgestaltungen enthaltenen Merkmale nicht auf diese jeweils beschränkt. Vielmehr können ein oder mehrere Merkmale aus einen oder mehreren Figuren zu weiteren zusätzlichen Ausgestaltungen verknüpft werden. Gleiches gilt auch mit den Merkmalen und Ausführungen der obigen Beschreibung. Es zeigen:
- Fig.1: eine erste beispielhafte Ausgestaltung eines Zahnrades mit einer Ausgleichsfunktion eines Zahnflankenspiels bei kämmenden Eingriff eines zweiten Zahnrad in einer Explosionsdarstellung,
- Fig. 2: eine erste Aufsicht auf eine erste Zahnradhälfte des Zahnrads auf Figur 1,
- Fig. 3: eine Aufsicht auf eine Schnittansicht einer zweiten Zahnradhälfte gemäß des Zahnrades aus Figur 1,
- Fig.4: eine Schnittansicht durch die zweite Zahnradhälfte aus Figur 3,
- Fig. 5: eine Ansicht eines zusammengesetzten Zahnrades aus den in Figur 1 bis Figur 4 hervorgehenden Einzelkomponenten in gesicherter Position, das heißt mit aktivierter Verdrehsicherung,
- Fig.6: eine Darstellung der ersten Zahnradhälfte zugehörig zur Figur 5 mit einem eingesetzten federnden Element,
- Fig. 7: einen Ausschnitt aus der zweiten Zahnradhälfte mit eingesetztem federnden Element, zugehörig zu dem zusammengesetzten Zahnrad aus Figur 5,
- Fig. 8: das Zahnrad aus Figur 5 mit nicht aktivierter Verdrehsicherung und dadurch zueinander verschobener erster und zweiter Zahnradhälfte,
- Fig. 9: ein erster Ausschnitt der zweiten Zahnradhälfte in Innenansicht aus Fig. 8 mit eingesetztem federnden Element,
- Fig. 10: ein zweiter Ausschnitt der zweiten Zahnradhälfte in Innenansicht aus Fig.8 mit eingesetztem federnden Element,
- Fig. 11: eine zweite Ausgestaltung einer zweiten Zahnradhälfte mit eingesetztem federnden Element in einer ersten Ansicht,
- Fig. 12: eine Aufsicht auf die Ausgestaltung aus Figur 11,
- Fig. 13: eine Schrägansicht auf die aus Figur 11 und Figur 12 hervorgehende zweite Zahnradhälfte,
- Fig. 14: eine Vergrößerung eines Ausschnittes aus Figur 13,
- Fig. 15 und Fig. 16: eine Aufsicht auf die aus Figur 13 hervorgehende zweite Zahnradhälfte mit einer Vergrößerung der Abstützung des federnden Elementes,
- Fig. 17: ein zusammengesetztes Zahnrad mit der aus Figur 11 bis Figur 16 hervorgehenden Konstellation einer zweiten Zahnradhälfte,
- Fig. 18: eine Aufsicht auf das Zahnrad aus Figur 17,
- Fig. 19: eine Vergrößerung eines Ausschnittes aus Figur 18,
- Fig. 20: eine weitere Ausgestaltung eines vorgeschlagenen Zahnrades in Explosionsdarstellung,
- Fig. 21: eine Schnittansicht des zusammengesetzten Zahnrades aus Figur 20 mit aktivierter Verdrehsicherung,
- Fig. 22: das aus Figur 20 und Figur 21 hervorgehende Zahnrad mit nicht aktivierter Verdrehsicherung,
- Fig. 23: Eine beispielhafte Ausgestaltung einer Verdrehsicherung in Form eines verschiebbaren Sperrbolzens wie er in Figur 21 und Figur 22 hervorgeht

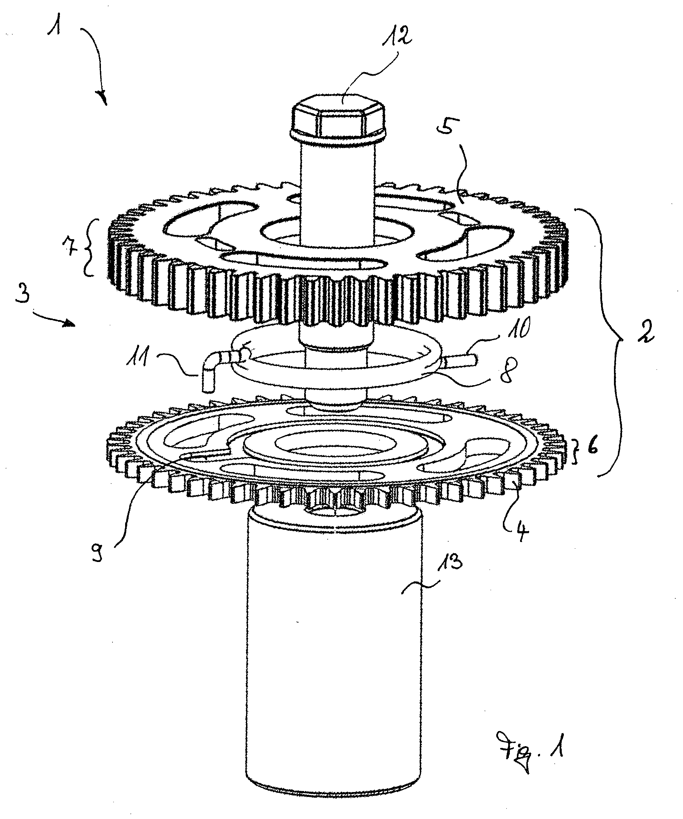

Fig. 1 zeigt ein erstes Zahnrad 1 mit einer geteilten Verzahnung 2, die hier in Explosionsdarstellung vorgestellt wird. Das Zahnrad 1 weist eine Teilung 3 auf. Gemäß der hier dargestellten Ausgestaltung des Zahnrades 1 verläuft die Teilung 3 senkrecht zu einer Drehachse des Zahnrades 1. Die Teilung 3 kann jedoch auch zumindest teilweise anders verlaufen, zum Beispiel eine axiale Erstreckung aufweisen. Dadurch wird das Zahnrad 1 in eine erste Zahnradhälfte 4 und eine zweite Zahnradhälfte 5 unterteilt. Die erste Zahnradhälfte 4 weist einen ersten Abschnitt 6 und die zweite Zahnradhälfte 5 weist einen zweiten Abschnitt 7 der Verzahnung auf. Des Weiteren ist zwischen der ersten Zahnradhälfte 4 und der zweiten Zahnradhälfte 5 ein federndes Element 8 angeordnet. Für dessen Anordnung im Zahnrad ist eine entsprechende Aussparung 9 zumindest in einem der beiden Zahnradhälften 4, 5 vorgesehen. Bevorzugt ist die Aussparung in der breiteren, zweiten Zahnradhälfte 5 angeordnet. Diese weist bevorzugt auch einen breiteren Verzahnungsabschnitt auf. Auch ist der breitere Verzahnungsabschnitt bevorzugt derjenige, der eine Kraft- bzw. Momentenübertragung vornehmlich vornimmt. Auch besteht die Möglichkeit, so wie dargestellt eine Aussparung in beiden Zahnradhälften 4, 5 vorzusehen. Bevorzugt in Abhängigkeit von einer Bauhöhe des verwendeten federnden Elementes 8 wird eine Tiefe der jeweiligen Aussparung gewählt. Dargestellt ist in dieser Explosionsdarstellung die in der ersten Zahnradhälfte 4 in einer Innenseite vorhandene Aussparung 9. Das federnde Element ist gemäß dieser Ausgestaltung als Torsionsfeder mit einem ersten Ende 10 und einem zweiten Ende 11 ausgestaltet. Das zweite Ende 11 weist hierbei einen abgewinkelten Arm 12 auf. In dieser Ausgestaltung wird der abgewinkelte Arm 11 in eine entsprechende Geometrie der Aussparung 9 der ersten Zahnradhälfte 4 angeordnet. Die Torsionsfeder als federndes Element 8 weist vorzugsweise ein bis drei, gegebenenfalls vier oder mehr Wicklungen auf. Dieses ist insbesondere davon abhängig, mit welcher Federspannung die beiden Zahnradhälften 4, 5 nach Lösung einer Arretierung verspannt sein sollen. Beispielsweise ist vorgesehen, dass eine Spannung von einem N/m vorgesehen wird. Bevorzugt befindet sich die Spannung in einem Bereich zwischen 0,5 N/m bis zum 2 N/m.

Wie des Weiteren aus Fig. 1 hervorgeht, ist die erste Zahnradhälfte 4 insbesondere im Bereich der geteilten Verzahnung 2 mit dem ersten Abschnitt schmaler als die zweite Zahnradhälfte 5. Bevorzugt ist es, dass die zweite Zahnradhälfte insgesamt dicker ist als die erste Zahnradhälfte 4. Gemäß einer bevorzugten Ausgestaltung ist vorgesehen, dass die erste Zahnradhälfte 4 nicht nur schmaler ist, sondern darüber hinaus deren Verzahnung schmalere Flanken im ersten Abschnitt 6 aufweist als die entsprechende Verzahnung der zweiten Zahnradhälfte 5 im zweiten Abschnitt 7. Dieses wird in den nachfolgenden Figuren näher verdeutlicht.

Eine Sicherung der einzelnen Komponenten des Zahnrades 1 kann so wie dargestellt beispielsweise durch eine Verschraubung mittels einer Längsschraube 12 erfolgen. Hierzu ist ein Gegenpart 13 vorgesehen, so dass das Zahnrad 1 mittels der Längsschraube 12 dort eingeschraubt und befestigt werden kann. Eine andere Sicherung ist ebenfalls möglich, zum Beispiel mittels eines Sicherungsringes. Der Gegenpart 13 ist nur beispielhaft dargestellt. Er verdeutlicht nur eine von vielen verschiedensten Möglichkeiten, wo und in welcher Weise das vorgeschlagene Zahnrad 1 angeordnet und genutzt werden kann.

Beispielhaft für eine Anwendung ist hierzu zu nennen: jegliche Anwendungen von Zahnräder bei Motoren, insbesondere Verbrennungsmotoren, aber ebenfalls in Getrieben. So kann ebenfalls eine Anwendung speziell bei Nockenwellen, Kurbelwellen oder auch bei Haushaltsgeräten erfolgen. Eine bevorzugte Anwendung liegt vor bei 3-Zylindermotoren. Aufgrund der bei einem 3-Zylindermotor generierten Drehmomente und deren Schwankungen, aber zum Beispiel auch durch eine erzeugte Unwucht bei einem 3-Zylindermotor, kann es zu einer größeren Geräuschentwicklung im Vergleich zu beispielsweise 4- oder 6-Zylindermotoren kommen. Durch Einsatz eines vorgeschlagenen Zahnrades wie beispielsweise dem Zahnrad 1 gelingt es, gerade bei einer derartigen 3-Zylinderverbrennungskraftmaschine die Geräuschentwicklung entsprechend verringern zu können. Daneben besteht die Möglichkeit, dass ein derartiges Zahnrad jedoch auch bei jeglicher anderen kämmenden Zahnradverbindung zum Einsatz kommt, insbesondere dann, wenn eine Geräuschentwicklung vermieden werden soll.

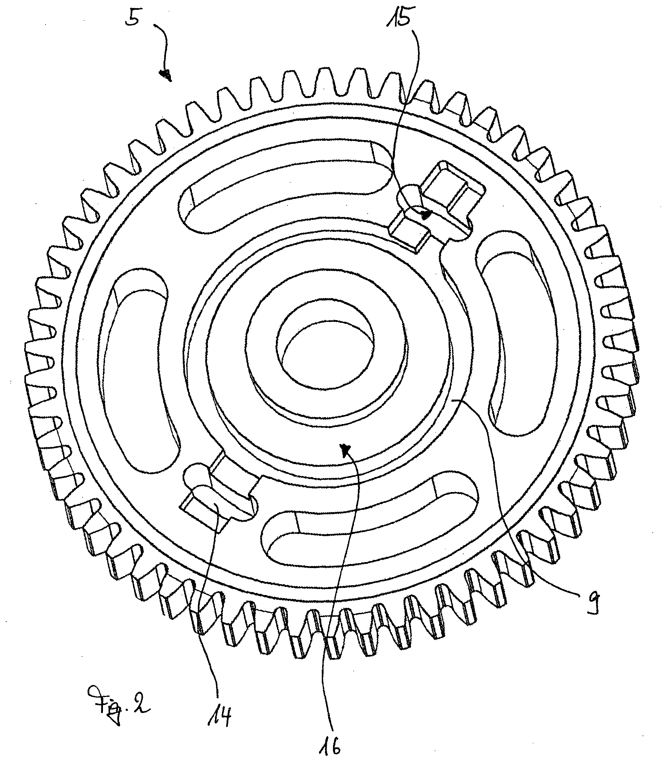

Fig. 2 zeigt in einer Schrägansicht die zweite Zahnradhälfte 5 aus Fig. 1 mit einer Innenseite in Bezug zu einem zusammengesetzten Zahnrad. Auch dort ist eine Aussparung 9 für das federnde Element erkennbar. Darüber hinaus ist eine erste Führung 14 und eine zweite Führung 15 vorgesehen, die in Zusammenspiel mit dem federnden Element dafür Sorge tragen, dass die Spannung zwischen der ersten Zahnradhälfte und der zweiten Zahnradhälfte 5 bei nicht aktivierter Verdrehsicherung generiert wird. Die zweite Führung 15 ist insbesondere stufenförmig gestaltet. Dieses erlaubt einen Versatz von einem Teil des hier nicht dargestellten federnden Elementes. Das ermöglicht, dass das federnde Element zum Beispiel als Verdrehsicherung genutzt wird. Je nach dem, in welcher Position sich ein Teil des federnden Elementes in der in diesem Falle zweiten Führung 15 befindet, ist damit die Verdrehsicherung aktiviert oder nicht aktiviert.

Des Weiteren ist aus Fig. 2 ein Führungs- und Gleitbereich 16 hervorgehend. In diesem Führungs- und Gleitbereich 16 sind die erste und die zweite Zahnradhälfte vorzugsweise in Kontakt zueinander und können dort umeinander verdreht werden. Der Führungs- und Gleitbereich 16 kann gemäß einer Ausgestaltung ausschließlich, zumindest im wesentlichen ausschließlich auf den Kragen beschränkt sein, auf den der Pfeil hinweist. Eine weitere Ausgestaltung sieht vor, dass zumindest ein weiterer Gleitbereich vorliegt, zum Beispiel unmittelbar benachbart, insbesondere anstoßend an den Kragen. Weiterhin ist es vorteilhaft, wenn zwischen den beiden Zahnradhälften der eigentliche Kontaktbereich gering gehalten wird. Das vermeidet unnötige Reibung und erlaubt auch ein empfindlicheres Verhalten des geteilten Zahnrads. Bevorzugt ist es zum Beispiel, wenn eine oder beide Zahnradhälften jeweils eine minimale Vertiefung an den einander gegenüberstehenden Seiten aufweisen, so dass ein direkter Kontakt vermieden wird. Die minimale Vertiefung ist vorzugsweise zumindest annähernd vollflächig. Sie kann zum Beispiel sich vom Kragen radial nach außen bis kurz vor die Verzahnung erstrecken.

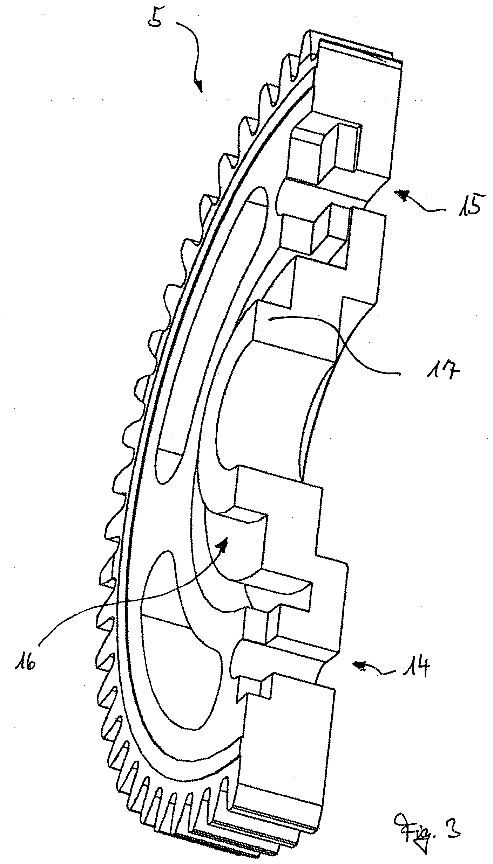

Fig. 3 zeigt die zweite Zahnradhälfte 5 in einer geschnittenen Ansicht aus der Schräge. Aus dieser Ansicht geht zum einen nochmals die jeweilige stufenförmige Ausgestaltung der ersten Führung 14 und der zweiten Führung 15 hervor. Zum anderen ist ebenfalls durch diese Schrägansicht die Ausbildung eines Kragens 17 deutlich, der für den Führungs- und Gleitbereich 16 mitgenutzt wird.

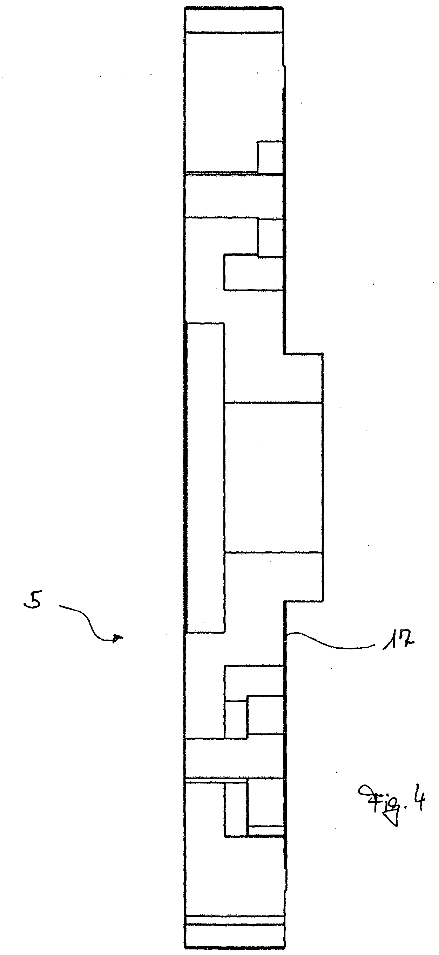

Fig. 4 zeigt die zweite Zahnradhälfte 5 aus den vorhergehenden Figuren in einer Schnittansicht. Diese Schnittansicht verdeutlicht die Lage der jeweiligen Führungen wie auch die beispielhafte Ausgestaltung der weiteren, innerhalb der zweiten Zahnradhälfte 5 angeordneten Geometrien. Des Weiteren ist durch diese Ansicht ebenfalls eine Erhöhung 17 deutlicher sichtbar, die kreisrund um die Drehachse auf dem Innenumfang der zweiten Zahnradhälfte 5 angeordnet ist. Diese Erhöhung erlaubt zum Beispiel, dass sich innerhalb derselben ein Schmiermittelfilm ausbilden kann, der ein Verdrehen zwischen den beiden Zahnradhälften dauerhaft sicherstellt.

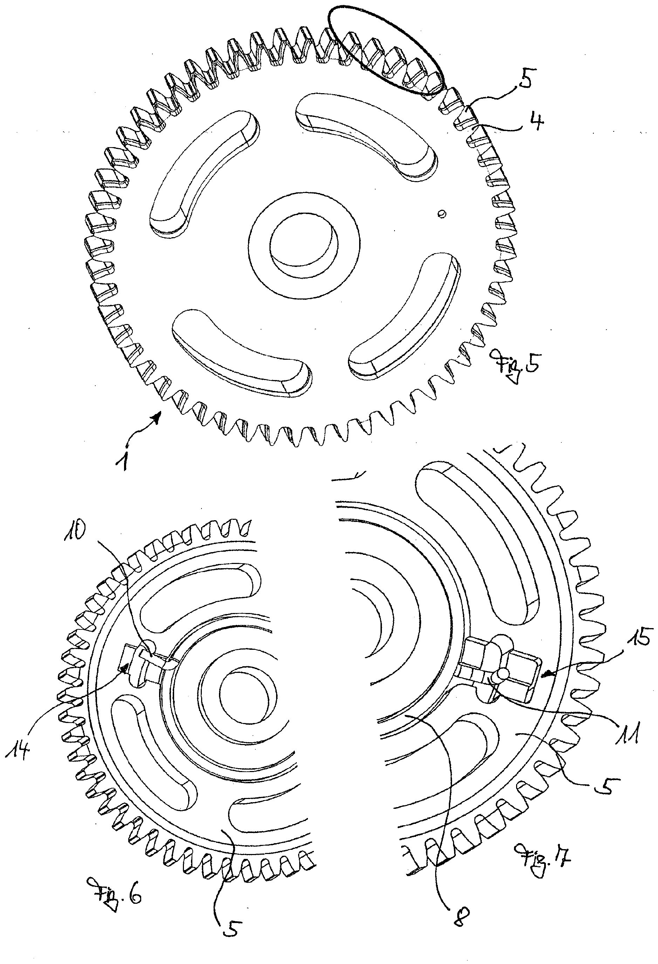

Fig. 5 zeigt das Zahnrad 1 aus Fig. 1 in zusammengesetzter Form. Die erste Zahnradhälfte 4 und die zweite Zahnradhälfte 5 sind zueinander gesichert. Wie aus dieser Darstellung entnehmbar ist, sind die Flanken der Verzahnung der ersten Zahnradhälfte 4 schlanker im Vergleich zu den Flanken der Verzahnung der zweiten Zahnradhälfte 5. Dieses wird insbesondere in dem durch den Kreis eingerahmten Bereich besonders deutlich. Bevorzugt ist der Unterschied derart, dass die Verzahnung der zweiten Zahnradhälfte die Verzahnung der ersten Zahnradhälfte vollständig überdeckt, insbesondere, wenn so wie dargestellt, die Verdrehsicherung aktiv ist. Die Position der beiden Zahnradhälften 4, 5 und deren Verzahnung ist jedoch so, dass das noch als ein bündiger Übergang von einer Verzahnung zur benachbarten Verzahnung aufzufassen ist.

Fig. 6 und Fig. 7 sind jeweils eine Ansicht auf die Innenseite der zweiten Zahnradhälfte 5. Fig. 6 zeigt hierbei die Position des federnden Elements 8 in der ersten Führung 14, während Fig. 7 die Position des federnden Elements 8 in der zweiten Führung 15 zeigt. Hierbei ist die jeweilige Position im arretierten Zustand dargestellt, das bedeutet, bei aktivierter Verdrehsicherung. Das zweite Ende 11 mit dem abgewinkelten Arm liegt hierbei an einer Stufe der zweiten Führung 15 an, wobei sich bei dieser Ausgestaltung das zweite Ende 11 auf einer unteren Position der stufenartigen zweiten Führung 15 angeordnet befindet. Das erste Ende 10 hingegen liegt an einer Kante bzw. Wand der ersten Führung 14 an. Das federnde Element 8 steht hierbei bevorzugt schon unter Spannung.

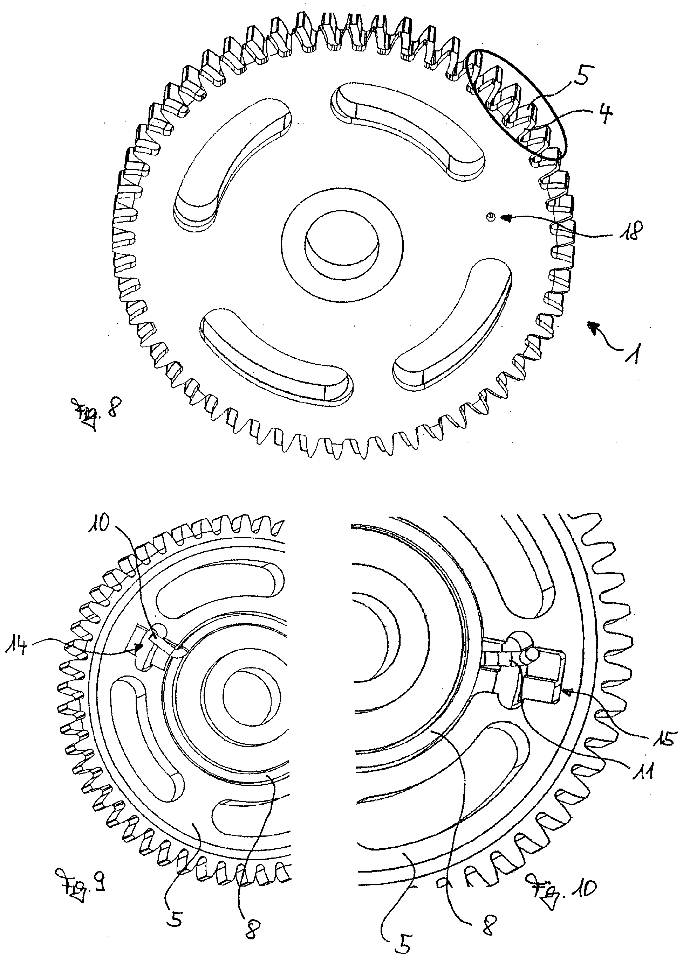

Fig. 8 zeigt das Zahnrad 1 aus den vorhergehenden Figuren nunmehr bei nichtaktivierter Verdrehsicherung. Dadurch sind beide Zahnradhälften 4, 5 miteinander, bevorzugt gegeneinander verspannt, wobei beide Zahnradhälften 4, 5 auch versetzt zueinander angeordnet sind. Der Versatz ist abhängig von der Spannungsrichtung des federnden Elements. Auch kann über die Ausgestaltung und Geometrie des zur Verfügung gestellten Verstellweges, zum Beispiel in der Aussparung, Einfluss auf den Versatz gemacht werden, vorzugsweise durch Nutzung als Anschlag oder auch durch Anordnung eines Anschlags. Der Versatz wird insbesondere in dem durch den Kreis hervorgehobenen Bereich deutlich sichtbar. Dieser Versatz ermöglicht, die Ausgleichsfunktion zum Ausgleichen des Zahnflankenspiels bei kämmendem Eingriff mit einem anderen Zahnrad sicherzustellen. Wie des Weiteren aus Fig. 8 entnehmbar ist, ist die Verdrehsicherung noch in dem Zahnrad 1 enthalten. Dargestellt ist beispielhaft eine kleine Öffnung 18 auf der Außenfläche der ersten Zahnradhälfte 4. Durch die Öffnung 18 kann ein Werkzeug eingeführt und damit das zweite Ende 11 des federnden Elements aus einer arretierenden Position in der Führung in eine Freigabeposition gebracht werden. Das federnde Element wirkend als Verdrehsicherung verbleibt im Zahnrad 1. Die Gefahr, dass die Verdrehsicherung herausfällt oder beim Herausnehmen zum Beispiel unabsichtlich in ein Gehäuse hineinfällt, ist gebannt. Die dargestellte Öffnung 18 ist bezüglich ihrer Geometrie und ihrer Lage nur beispielhaft. Die Öffnung zum Einführen des Werkzeugs kann an einem anderen Ort der Zahnradhälfte liegen, zum Beispiel eine der Aussparungen selbst sein, die sich bis an die Oberfläche zieht. Zum Beispiel kann das Auslösen aus einer Arretierung mit Hilfe eines Werkzeugs erfolgen, welches in die Aussparung eingreift, zum Beispiel in die Aussparung 15 in Fig. 2. Sodann kann auf das in dieser Aussparung 15 angeordnete zweite Ende 11 aus Fig. 1 zum Beispiel ein Druck ausgeübt werden, der zur Ortsverlagerung des zweiten Endes 11 führt. Auch kann die Öffnung an der anderen Zahnradhälfte angeordnet sein. Auch kann die Öffnung größer, länglich orientiert oder in sonstiger Weise ausgestaltet sein. Eine weitere Ausgestaltung sieht beispielweise vor, dass von Außen zum Beispiel mittels eines Magneten eine Ortsverlagerung vorgenommen wird.

Eine weitere Ausgestaltung sieht zum Beispiel vor, dass die kleine Öffnung 18 dazu genutzt wird, ein Ende des federnden Elements darin verankern zu können. Dadurch funktioniert die Öffnung 18 als Mitnehmer für die erste Zahnradhälfte 4. Auch wird das federnde Element dadurch bevorzugt in der Zahnradhälfte verankert. So ist beispielsweise die Kontur der Öffnung an die Kontur des einzubringenden Endes des federnden Elements angepasst, vorzugsweise identisch. So kann zum Beispiel das federnde Element einen runden Federstahldraht aufweisen, welches in eine runde Bohrung eingreift, die die Öffnung 18 ergibt. Vorzugsweise ist das federnde Element aus einem Federstahldraht hergestellt. Die Öffnung 18 kann, muss jedoch nicht immer in zwingender Weise vorgesehen sein. Vielmehr kann auch ein Sackloch in der Zahnradhälfte vorgesehen sein, in dass das Ende des federnden Elements eingebracht wird.

Fig. 9 und Fig. 10 zeigen wiederum die zweite Zahnradhälfte 5 mit dem federnden Element 8 gemäß Fig. 8 und der nichtaktiven Verdrehsicherung. Fig. 9 zeigt hierbei die Position des federnden Elements 8 in der ersten Führung 14, während Fig. 10 die Position des federnden Elements 8 in der zweiten Führung 15 zeigt. Hierbei ist die jeweilige Position im nichtarretierten Zustand dargestellt, das bedeutet, bei nichtaktivierter Verdrehsicherung. Das zweite Ende 11 mit dem abgewinkelten Arm liegt hierbei nicht mehr an einer Stufe der zweiten Führung 15 an. Vielmehr ist es über diese Stufe hinweggehoben und liegt nun auf dieser auf. Bei dieser Ausgestaltung ist damit das zweite Ende 11 auf einer oberen Position der stufenartigen zweiten Führung 15 angeordnet. Das erste Ende 10 hingegen liegt weiter an der gleichen Kante bzw. Wand der ersten Führung 14 an. Das federnde Element 8 kann nun unter Spannung stehend für eine Relativdrehung zwischen der ersten und der zweiten Zahnradhälfte sorgen.

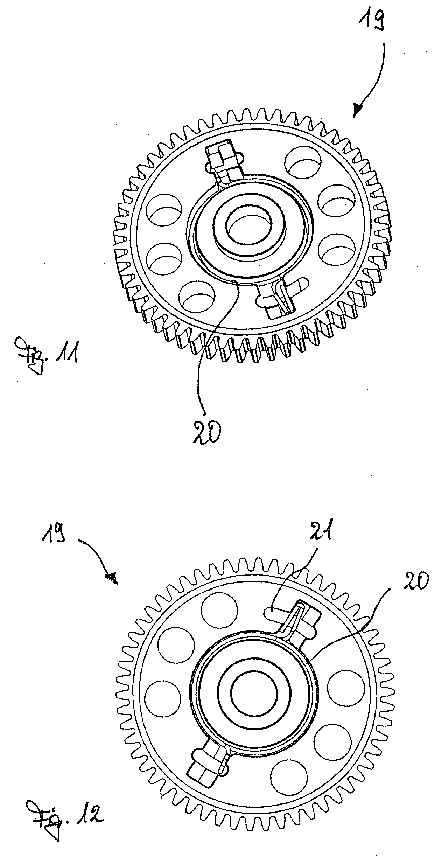

Fig. 11 zeigt eine weitere Ausgestaltung einer zweiten Zahnradhälfte 19 mit einem zweiten federnden Element 20. Bei dieser Ausgestaltung wie auch der vorherigen des zweiten Zahnrads ist das federnde Element im Wesentlichen, bevorzugt zumindest annähernd vollständig, bevorzugt vollständig in der zweiten Zahnradhälfte angeordnet. Daher ist es bevorzugt, die zweite Zahnradhälfte zumindest in dem Bereich der Anordnung des federnden Elements dicker zu gestalten als die erste Zahnradhälfte. Vorzugsweise ist die zweite Zahnradhälfte auch im Bereich der Verzahnung dicker als die erste Zahnradhälfte. Vorzugsweise agiert nur ein Bereich des federnden Elements, in diesem Fall ein Ende der dargestellten Schenkelfeder, mit der ersten Zahnradhälfte, um die Verspannung zu erzeugen. Gleichzeitig kann daher dieses Ende auch für die Arretierung genutzt werden, so dass dadurch die Verdrehsicherung gebildet wird. Die zweite Zahnradhälfte 19 hat ebenfalls Führungen, in denen die jeweiligen Enden des federnden Elements 20 angeordnet sind. Allerdings ist diesmal ein Ende des federnden Elements 20 in Form der Schenkelfeder zusätzlich als Biegefeder gebogen.

Fig. 12 zeigt die zweite Zahnradhälfte 19 aus Fig. 11 in einer Aufsicht. Aus dieser ist die gebogene Form des einen Endes 21 deutlicher hervorgehend. Zum einen ist über diese Aufsicht erkennbar, dass zusätzlich zu der torsionsfedernden Momentenabstützung auch eine durch das gebogene Endelement hinzukommende federnde Abstützung des federnden Elementes 20 gegeben ist. Darüber hinaus zeigt die Aufsicht deutlich, wie eine Führungsgasse 21 in der zweiten Zahnradhälfte 19 angeordnet ist. Hierbei ist neben einer stufigen Gestaltung der Führung zusätzlich ein Verdrehweg eingeräumt, entlang dem eine nicht näher dargestellte erste Zahnradhälfte mit einem in die Führungsgasse 21 eingreifenden Teil geführt werden kann. Des Weiteren zeigt die vorliegende Aufsicht, dass die jeweiligen Führungen in der zweiten Zahnradhälfte 19 als solches symmetrisch angelegt sein können, nur die Führungsgasse ist unterschiedlich ausgelegt. Dieses hängt insbesondere damit zusammen, wie die einzelnen Verdrehsicherungen ausgelegt sein sollen. Bei der hier dargestellten Ausführung ist beispielsweise vorgesehen, dass zumindest ein Ende des federnden Elementes beidseitig innerhalb der Führung anliegt, während das andere Ende zumindest an einer Seite in der zweiten Zahnradhälfte innerhalb der Führung zum Anliegen kommt. Insbesondere die gebogene Form des Endes erlaubt es, dass der eine abspreizende Abschnitt gegen eine Begrenzung der Führung und der andere abspreizende Abschnitt des Endes gegen einen gegenüberliegenden Bereich der Führung innerhalb der zweiten Zahnradhälfte zum Anliegen kommt.

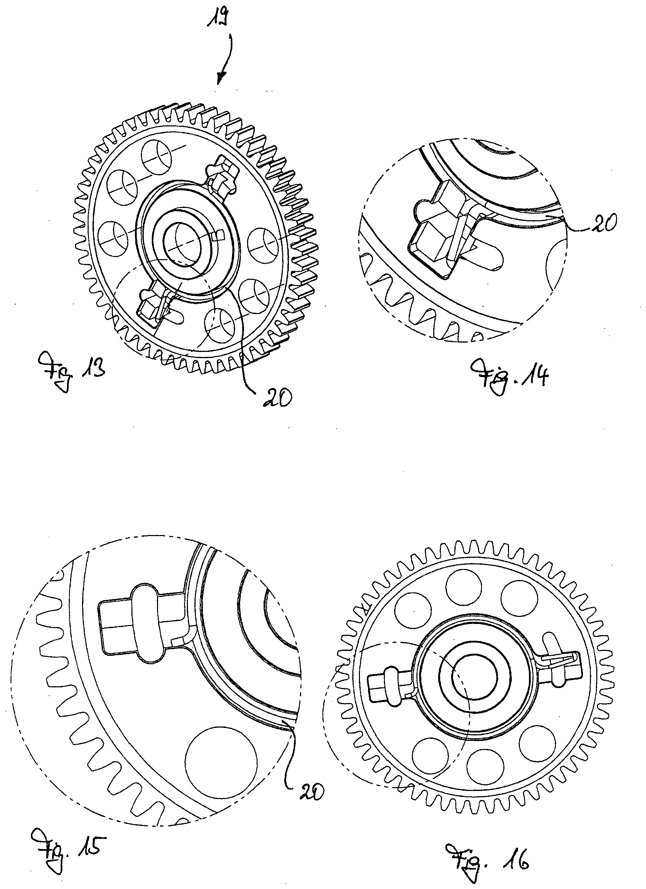

Figur 13 zeigt die zweite Zahnradhälfte 19 aus Figur 11 und Figur 12 in einer weiteren Ansicht. Hierbei ist nochmals verdeutlicht, dass das federnde Element 20 mit seinem gebogenem Ende im Rahmen der stufenartigen Führung in einer Ebene beidseitig anliegend ist, während das andere abgebogene Ende nur einseitig anliegt. Wird das beidseitige Ende aus der einen, tieferen Ebene nach oben in eine darüber liegende Ebene versetzt, liegt hingegen dieses Ende nicht mehr beidseitig jeweils an einer Fläche der Zahnradhälfte an. Vielmehr besteht nunmehr die Möglichkeit, dass zumindest an einer Seite dieses Ende ein Mitnehmer angreift. Dadurch lässt sich aus der Spannung, hervorgerufen durch das federnde Element 20, eine Relativbewegung, vorzugsweise direkt zwischen den beiden Zahnradhälften generieren.

Figur 14 zeigt das beidseitige Anliegen des umgebogenen Endes des federnden Elementes 22 in einer Vergrößerung. Hierdurch wird verdeutlicht, dass die Spannungserzeugung zwischen den beiden Zahnradhälften auch durch unterschiedliche Geometrien des federnden Elementes 20 unterstützt werden können. Zum anderen zeigt dieses auch, dass durch das umgebogene Ende eine Fixierung innerhalb der stufenartigen Führung und damit Arretierung erfolgen kann.

Figur 15 zeigt wiederum einen Ausschnitt aus der ebenfalls dargestellten Figur 16. Hierbei ist in Figur 15 das andere Ende des federnden Elementes 20 näher dargestellt. Dieses ist nur einseitig anliegend. Gleichzeitig wird damit jedoch ebenfalls dargestellt, dass sich dieses Ende an der zweiten Zahnradhälfte abstützt und als Gegenlager wirkt, um die Spannungserzeugung sicher zu stellen. Prinzipiell besteht jedoch ebenfalls die Möglichkeit, dass aufgrund des stufenartigen Ausgestaltens der dort vorgesehenen Führung, wie in Figur 15 näher dargestellt, auch ein Verschiebeweg vorgesehen ist, entlang der das Ende gegebenenfalls bewegbar wäre. Es besteht somit auch die Möglichkeit, dass bei aktiver Verdrehsicherung sich das geteilte Zahnrad in einem vorgespannten Zustand befindet. Eine andere Ausgestattung wiederum sieht vor, dass in einem aktiven Zustand der Verdrehsicherung sich das geteilte Zahnrad in einem ungespannten Zustand befindet. Erst bei nichtaktiver Verdrehsicherung und Verdrehen in eine Wirkposition kommt es zur Verspannung.

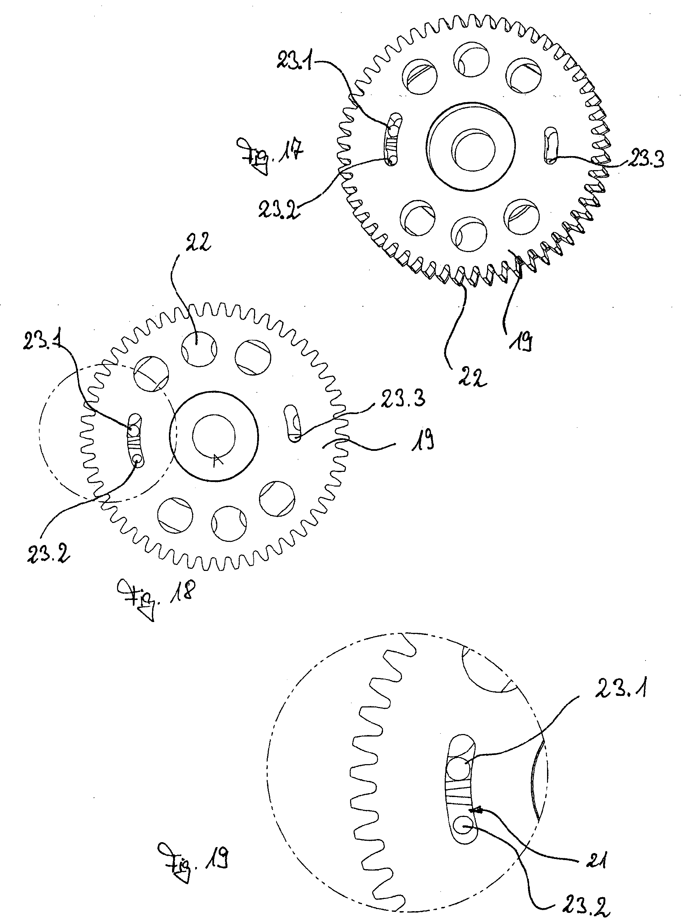

Figur 17 zeigt das zusammengesetzte Zahnrad mit der zweiten Zahnradhälfte 19 in einer Schrägansicht und dem fast vollständig abgedeckten ersten Zahnradhälfte 22. Durch die Aussparungen in der zweiten Zahnradhälfte 19 ist eine jeweilige Position erkennbar von beispielweise drei Hervorhebungen 23.1, 23.2 und 23.3, die in Verbindung mit der ersten Zahnradhälfte 22 stehen. In der aus Figur 17 hervorgehenden Ausgestaltung befindet sich das Zahnrad in einem arretierten Zustand. Das bedeutet, dass die Verdrehsicherung aktiv ist. Hierbei spielen die erste Hervorhebung 23.1 und die dritte Hervorhebung 23.3 mit dem federnden Element insofern zusammen, dass das Zahnrad sich in einem Montagezustand befindet. Das federnde Element drückt die erste Zahnradhälfte 19 mit Hilfe der ersten Hervorhebung 23.1 in diese Montageposition, wobei die Hervorhebung 23.3 als Anschlag dient und damit die Montageposition festlegt. Die zweite Hervorhebung 23.2 ist in der Montageposition des Zahnrads ohne wirksame Funktion.

Bevorzugt wird mit einer derartigen Ausgestaltung wie aber auch mit anderen Ausgestaltungen folgendes ermöglicht: In der arretierten Position stützt sich zum Beispiel das federnde Element zweimal an der zweiten Zahnradhälfte und einmal an der ersten Zahnradhälfte ab. Wird hingegen das federnde Element aus seiner Arretierungs- und damit Montageposition in die Spielausgleichsposition gebracht, stützt sich bevorzugt das federnde Element einmal an der ersten und einmal an der zweiten Zahnradhälfte ab. Es erhält somit die Möglichkeit, die Relativbewegung zwischen beiden Zahnradhälften zu ermöglichen.

Figur 18 zeigt das Zahnrad in einer Aufsicht. Hierbei ist aufgrund der Arretierung und der schmaleren Zahnflanken der Verzahnung an der ersten Zahnradhälfte die erste Zahnradhälfte so am äußeren Umfang nicht erkennbar. Allerdings ist die erste Zahnradhälfte teilweise durch die Aussparungen in der zweiten Zahnradhälfte 19 erkennbar. Eingekreist ist die aktivierte Verdrehsicherung, die durch die Positionsfixierung einer der Erhebungen 23 erfolgt ist. Dieses wird nachfolgend vergrößert in Figur 19 dargestellt. Aus der Figur 18 geht ebenfalls die als Anschlag dienende dritte Hervorhebung 23.3 hervor, die in der Aussparung der zweiten Zahnradhälfte an deren einem Ende durch das Verspannt-sein über das federnde Element anliegt. Wäre hingegen das Zahnrad in einer Zahnflankenspiel-Ausgleichsfunktion, so würde die dritte Hervorhebung 23.3 nicht am Ende der Aussparung anliegen sondern vielmehr in einer Position entlang der Aussparung sich befinden. Damit wäre die dritte Hervorhebung dann ohne Funktion in dieser Stellung. Dafür wäre aber das federnde Element in Kontakt mit der zweiten Hervorhebung 23.2 und würde gegen diese zum Beispiel drücken, während die erste Hervorhebung 23.1 nicht mehr in Kontakt mit der ersten Hervorhebung 23.1 wäre. Dadurch wäre der Spielausgleich an den Flanken ermöglicht.
Figur 19 zeigt den eingekreisten Ausschnitt aus Figur 18. Bei der dargestellten aktivierten Verdrehsicherung ist die erste Hervorhebung 23.1 unter Spannung stehend zwischen dem federnden Element und der aus Fig. 18 hervorgehendenden dritten Hervorhebung 23.3 als Anschlag eingeklemmt. Die Spannung wird durch das umgebogene Ende des federnden Elementes erzeugt. Dadurch wird die erste Hervorhebung 23.1 gedrückt und damit arretiert. Die Beweglichkeit zwischen der ersten und der zweiten Zahnradhälfte ist dadurch unterbunden. Das umgebogene Ende des federnden Elements ist hierbei vorzugsweise festgesetzt, wie es zum Beispiel aus Fig. 14 hervorgeht. Des Weiteren ist in dieser Ausgestaltung aus Figur 19 zu erkennen, dass mittels der ersten Hervorhebung 23.1 und der zweiten Hervorhebung 23.2, die versetzt dazu angeordnet ist, darüber hinaus auch in der Führungsgasse 21 eine Wegbegrenzung vorliegt. Die Wegbegrenzung durch beide Hervorhebungen 231, 23.2 jeweils durch einseitiges Anstoßen innerhalb einer Führungsgasse 21 kann beispielsweise eine Umfangsrelativbewegung begrenzen. Des Weiteren ist aus Figur 19 ersichtlich, dass zum Beispiel die beiden Hervorhebungen 23.1, 23.2 unterschiedlicher Kontur sein können. Die eine Erhebung ist kleiner vom Durchmesser als die andere. Dadurch ist sichergestellt, dass es nicht zu einer Doppelpassung und dadurch gegebenenfalls Klemmung bei einer Relativbewegung zwischen erster und zweiter Zahnradhälfte kommt. Für die Umfangswegbeschränkung reicht zum Beispiel die vorgesehene kleinere Erhebung als zweite Hervorhebung 23.2 aus. Es besteht jedoch ebenfalls die Möglichkeit, dass beide Hervorhebungen die gleichen Dimensionen aufweisen. Auch können beide Hervorhebungen 23.1, 23.2 beispielweise unterschiedliche Längen aufweisen. Durch eine Ortsverlagerung eines Endes des federnden Elements kann dadurch einmal ein Eingriff mit einer der Hervorhebungen möglich bzw. ein anderes Mal unmöglich sein.

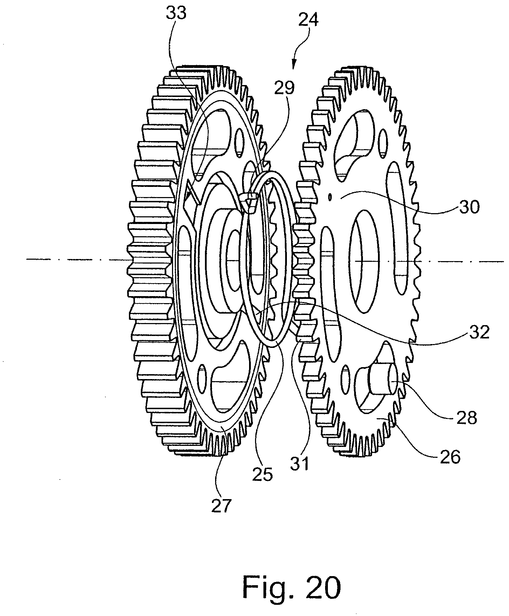

Figur 20 zeigt ein weiteres Zahnrad 24 in einer Explosionsdarstellung. So ist als federndes Element 25 wiederum eine Torsionsfeder vorgesehen. Diese Torsionsfeder ist zwischen der ersten Zahnradhälfte 26 und der zweiten Zahnradhälfte 27 angeordnet. Zusätzlich ist eine verschiebbare Sperrkomponente 28 in der beispielhaften Form eines Sperrbolzens vorgesehen. Diese Sperrkomponente 28 ist beispielsweise in der Lage, axialparallel zu einer Drehachse des Zahnrads 24 verschoben zu werden. Vorzugsweise hat die Sperrkomponente 28 eine erste wie auch dazu entgegengesetzte zweite Endstellung. Während in der einen Endstellung ein Sichern beider Zahnradhälften zueinander erfolgt, lässt die andere Endposition ein relatives Verdrehen der Verzahnung beider Zahnradhälften zueinander zu. Die hierfür notwendige Verspannung wird durch das federnde Element 25 erzielt, welches dementsprechend mit der ersten beziehungsweise zweiten Zahnradhälfte 26, 27 gekoppelt ist. Die Koppelung erfolgt mit der ersten Zahnradhälfte 26 durch das erste Ende 29, welches in eine Öffnung 30 eingebracht wird. Das zweite Ende 31 hingegen ist in einer entsprechenden passenden Aussparung 32 eingesetzt und kann dort sich nicht bewegen. Das erste Ende 29 hingegen kann entlang einer Führung 33 innerhalb der zweiten Zahnradhälfte 27 bis zum Anschlag jeweils seitlich bewegt werden. Durch diesen Anschlag wird beispielsweise die Beweglichkeit von erster und zweiter Zahnradhälfte zueinander festgelegt.

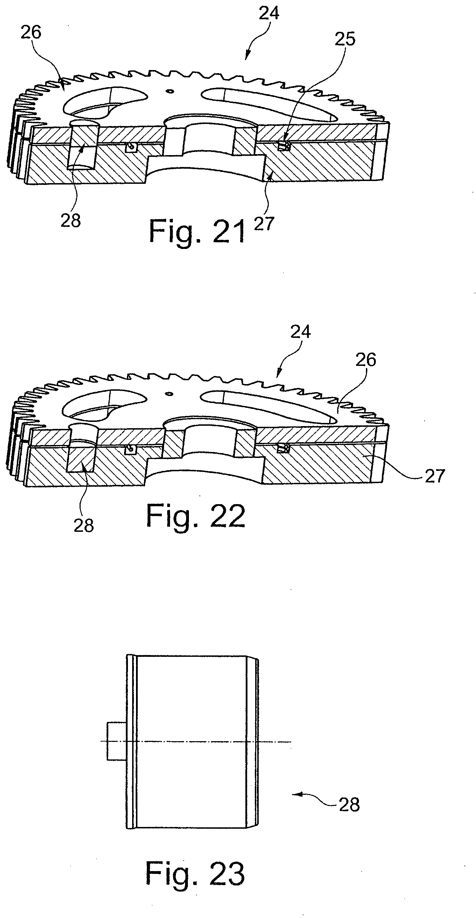

Figur 21 zeigt in einer Schnittdarstellung das Zahnrad 24 aus Figur 20 in zusammengesetzter Bauweise. Die erste Zahnradhälfte 26 und die zweite Zahnradhälfte 27 sind mittels der Sperrkomponente 28 miteinander arretiert. Die Darstellung zeigt, wie die Sperrkomponente 28 zum einen innerhalb der ersten Zahnradhälfte 26 sitzt, zum anderen aber zum Teil in eine entsprechende Führung der zweiten Zahnradhälfte 27 eingreift. Dadurch können beide Zahnradhälften 26, 27 trotz der durch das federnde Element 25 aufgebrachten Verspannungen sich relativ zueinander nicht verdrehen. So wie dargestellt, ist die Sperrkomponente 28 ohne einen Begrenzungsweg nach außen dargestellt. Bevorzugt ist die Sperrkomponente 28 jedoch zumindest im Rahmen einer Presspassung in die erste Zahnradhälfte 26 eingebracht. Dieses vermeidet, dass die Sperrkomponente 28 unbeabsichtigt aus dem Zahnrad 24 beispielsweise bei der Montage herausfallen kann. Beispielsweise kann hierzu ebenfalls vorgesehen sein, dass in der ersten Zahnradhälfte 26 eine Spielpassung und in der zweiten Zahnradhälfte 27 eine Presspassung vorliegt. In diesem Falle wird die Sperrkomponente 28 durch die Presspassung in der zweiten Zahnradhälfte 27 gegen ein Hinausfallen gesichert. Es besteht ebenfalls die Möglichkeit, dass die erste Zahnradhälfte 26 eine derartige Öffnung aufweist, die von sich aus ein Herausfallen verhindert, indem beispielsweise die Sperrkomponente entsprechend abgedeckt ist durch eine der Flächen der ersten Zahnradhälfte 26. Dieses ist vergleichbar mit der Abdeckung des federnden Elementes 25, welches so wie dargestellt zum überwiegenden Teil ausschließlich in einer entsprechenden Aussparung innerhalb der zweiten Zahnradhälfte 27 angeordnet ist.

Figur 22 zeigt in einer weiteren Ausgestaltung das Zahnrad aus Figur 20 in einer weiteren Schnittansicht. Das Zahnrad 24 ist hierbei mit einer nicht aktiven Verdrehsicherung versehen. Hierzu ist die Sperrkomponente 28 in einer zweiten Position, nämlich in die zweite Zahnradhälfte 27 hineingepresst. Dadurch wird die Arretierung der ersten Zahnradhälfte 26 und der zweiten Zahnradhälfte 27 aufgelöst. Beide Zahnradhälften können relativ zueinander sich verdrehen. Dass dieses erfolgt ist, kann anhand der unterbrochenen Zahnflanken von erster und zweiter Zahnradhälfte im Vergleich zu denjenigen aus Figur 21 erkannt werden. Die Sperrkomponente 28 ist nunmehr gesichert und kann sich axial nicht mehr aus seiner Position heraus begeben, es sei denn, dass es mittels eines Werkzeuges aus dieser Position wieder heraus gezogen werden würde. Hierzu kann beispielsweise die Sperrkomponente 28 mithilfe eines von außen auf die Sperrkomponente 28 einwirkenden Zieh- oder Presswerkzeuges wieder in eine Position gebracht werden, die zu einer Arretierung der beiden Zahnradhälften 26, 27 führt.

Figur 23 zeigt eine beispielhafte Ausgestaltung der Sperrkomponente 28 aus den Figuren 20 bis 22. Die Sperrkomponente 28 weist zum einen beispielhaft an einem Ende eine Anfasung auf, die ein Hineinschieben von der ersten Zahnradhälfte in die zweite Zahnradhälfte erleichtert. Zum anderen ist zum Beispiel der Durchmesser der Sperrkomponente 28 derart, dass ein unbeabsichtigtes Auseinanderbrechen durch die Dimensionierung der Sperrkomponente 28 nicht auftreten kann. Zum anderen ist beispielsweise am anderen Ende der Sperrkomponente 28 in vorteilhafter Weise vorgesehen, eine Verbreiterung mit einer Fasung vorzusehen. Dieses erlaubt ein Einpressen in die zweite Zahnradhälfte. Auf diese Weise kann beispielsweise auch eine Ausgestaltung genutzt werden, bei der die erste wie auch die zweite Zahnradhälfte jeweils eine Spielpassung aufweisen und die Presspassung ausschließlich durch die Sperrkomponente 28 erzeugt wird. Neben dieser beispielhaften Ausgestaltung der Sperrkomponente 28 können jedoch andere Ausgestaltungen genutzt werden, die zu einer Arretierung der beiden Zahnradhälften führt. Neben der Nutzung von einer Sperrkomponente 28 besteht ebenfalls die Möglichkeit, mehrere derartige Sperrkomponenten vorzusehen.

Wie aus den obigen verschiedenen Ausgestaltungen hervorgeht, sind die Flankenkontur, der Zahnfußdurchmesser wie auch der Zahnkopfdurchmesse von erster und zweiter Zahnradhälfte zumindest annähernd identisch, können bei Bedarf jedoch auch jeweils weiter angepasst werden. In den dargestellten Ausgestaltungen ist die jeweils erste Zahnradhälfte mit einer geringeren Dicke versehen als die zweite Zahnradhälfte, insbesondere im Bereich der Verzahnung. Daher ist es bevorzugt, die erste Zahnradhälfte als diejenige Komponente des Zahnrads zu nutzen, die das Flankenspiel der miteinander kämmenden Zahnräder ausgleicht. In diesem Falle überträgt die erste Zahnradhälfte auch ein geringeres Moment als die zweite Zahnradhälfte. Bevorzugt hat hierfür die erste Zahnradhälfte eine abgeschwächte Zahnform im Vergleich zur zweiten Zahnradhälfte. Dadurch gelingt es, dass ein Dauerfestigkeitsverhalten beider Zahnradhälften vorzugsweise annähernd gleich ist. Es besteht jedoch ebenfalls die Möglichkeit, dass die zweite, dickere Zahnradhälfte das Flankenspiel ausgleicht. Eine weitere Ausgestaltung sieht beispielweise vor, dass zwei Zahnräder miteinander kämmen, wobei beide Zahnräder geteilte Zahnräder sind. Bevorzugt sind beide Zahnräder so wie oben vorgeschlagen ausgebildet. Es besteht jedoch ebenfalls die Möglichkeit, dass nur eines der beiden geteilten Zahnräder so wie oben vorgeschlagen ausgestaltet ist. Bevorzugt weisen beide geteilte Zahnräder jeweils eine dünnere erste Zahnradhälfte auf, die das Flankenspiel ausgleichen. Weiter bevorzugt ist es, wenn jede dünnere erste Zahnradhälfte mit der dickeren zweiten Zahnradhälfte des anderen kämmenden Zahnrads interagiert, das heißt, in Kontakt ist. Dadurch verteilt sich beispielsweise das auszugleichende Zahnflankenspiel auf beide Zahnräder. Bevorzugt wird derartiges bei breiteren Zahnrädern vorgesehen, die miteinander kämmen.

Das vorgeschlagene geteilte Zahnrad kann im Übrigen eine Schräg-, Gegenschräg- oder auch Pfeilverzahnung wie auch eine Geradverzahnung aufweisen. Das Zahnrad kann ein Stirnrad sein, das Prinzip ist aber ebenfalls bei einer Zahnstange einsetzbar. Das Zahnrad kann aber auch ein Ellipsenrad, ein Kegelrad, ein Kronenrad, ein Schneckenrad oder eine sonstiges sich bewegendes, insbesondere sich drehendes, mit einer Verzahnung versehenes Objekt sein, bei dem über die Verzahnung eine Kraft übertragen wird. Die Verzahnung kann auch eine Innenverzahnung umfassen und daher das Zahnrad eine Innenverzahnung aufweisen. Bevorzugt wird das Zahnrad in Zahnradgetrieben unterschiedlichster Bauart eingesetzt, beispielsweise bei Wälzgetrieben oder Schneckengetrieben, insbesondere auch bei unterschiedlichsten Planetengetrieben, bei handbetätigten wie auch automatisch betätigten Getriebeschaltungen.

## Patentansprüche

1. Zahnrad (1) mit einer Ausgleichsfunktion eines Zahnflankenspiels bei kämmendem Eingriff mit einem zweiten Zahnrad mittels einer geteilten Verzahnung (2), wobei das Zahnrad (1) zumindest eine Teilung (3) aufweist, entlang der eine erste Zahnradhälfte (4) mit einem ersten Abschnitt (6) der geteilten Verzahnung (2) und eine zweite Zahnradhälfte (5) mit einem zweiten Abschnitt (7) der geteilten Verzahnung (2) zueinander verdrehbar angeordnet sind, wobei eine Arretierung der Zahnradhälften (4, 5) zueinander mittels einer Verdrehsicherung vorgesehen ist, **dadurch gekennzeichnet, dass** die aktivierte Verdrehsicherung ein gegenseitiges Verdrehen der Zahnradhälften (4, 5) unterbindet, wobei bei aktivierter Verdrehsicherung der erste und der zweite Abschnitt (6, 7) der geteilten Verzahnung (2) zueinander bündig übergehen, während bei einer nichtaktivierten Verdrehsicherung der erste und der zweite Abschnitt (6, 7) der geteilten Verzahnung (2) versetzt zueinander angeordnet sind, wobei beide Abschnitte (6, 7) zueinander mittels eines federnden Elements (8) verspannt sind und die nichtaktive Verdrehsicherung bei Betrieb des Zahnrads im Zahnrad (1) verbleibt.

2. Zahnrad (1) nach Anspruch 1, **dadurch gekennzeichnet, dass** die Verdrehsicherung zerstörungsfrei lösbar ist.

3. Zahnrad (1) nach Anspruch 1 oder 2, **dadurch gekennzeichnet, dass** die Verdrehsicherung wiederholbar aktivierbar ist.

4. Zahnrad (1) nach einem der vorhergehenden Ansprüche, **dadurch gekennzeichnet, dass** die Verdrehsicherung eine im Zahnrad (1) angeordnete Komponente ist, die in einer ersten Position ein Verdrehen sperrt und in einer zweiten Position ein Verdrehen ermöglicht, wobei zumindest in der zweiten Position die Komponente unter Spannung steht.

5. Zahnrad (1) nach einem der vorhergehenden Ansprüche, **dadurch gekennzeichnet, dass** die Verdrehsicherung und das federnde Element (8) ein Bauteil sind.

6. Zahnrad (1) nach einem der vorhergehenden Ansprüche, **dadurch gekennzeichnet, dass** als federndes Element (8) eine Schenkelfeder im Zahnrad (1) angeordnet ist, die als Verdrehsicherung wie auch als die beiden Zahnradhälften (6, 7) miteinander verspannende Komponente dient.

7. Zahnrad (1) nach einem der vorhergehenden Ansprüche, **dadurch gekennzeichnet, dass** die erste und die zweite Zahnradhälfte (4, 5) jeweils eine in Überdeckung bringbare Führung aufweisen, in die eine bewegbar angeordnete Sperrkomponente eingesetzt ist, die als Verdrehsicherung fungiert.

8. Zahnrad (1) nach einem der vorhergehenden Ansprüche, **dadurch gekennzeichnet, dass** die erste und die zweite Zahnradhälfte jeweils eine in Überdeckung bringbare Führung aufweisen, die Verdrehsicherung einen abgewinkelten Arm aufweist, der in beide Führungen gleichzeitig einsetzbar ist und dadurch die Verdrehsicherung aktiviert.

9. Zahnrad (1) nach einem der vorhergehenden Ansprüche, **dadurch gekennzeichnet, dass** die Verdrehsicherung einen verschiebbaren Sperrbolzen (12) umfasst.

10. Verfahren zum Einbau eines geteilten Zahnrads (1), vorzugsweise nach einem der vorhergehenden Ansprüche, wobei zum Einbau eine erste und eine zweite Zahnradhälfte (4, 5) des geteilten Zahnrads (1) mit jeweiligen Abschnitten einer geteilten Verzahnung (2) verdrehsicher zueinander arretiert werden, nach dem Einbau eine Arretierung der beiden Zahnradhälften (4, 5) gelöst wird und die beiden Zahnradhälften (4, 5) beweglich zueinander unter Spannung stehen, **dadurch gekennzeichnet, dass** eine die Arretierung bewirkende Komponente nach Lösen der Arretierung im Zahnrad (1) verbleibt.

11. Verfahren zum Einbau nach Anspruch 10, **dadurch gekennzeichnet, dass** von außen in das Zahnrad (1) eingegriffen wird und die Arretierung bewirkende Komponente versetzt und hierbei die Arretierung gelöst wird.

## Claims

1. Tooth wheel (1) having a compensating function for compensating, by use of a divided toothing (2), tooth flank play in a meshing engagement with a second toothed wheel, said toothed wheel (1) having at least one split (3) along which a first toothed wheel half (4) comprising a first section (6) of the divided toothing (2) and a second toothed wheel half (5) comprising a second section (7) of the divided toothing (2) are arranged so as to be able to rotate relative to one another, the toothed wheel halves (4, 5) being provided to be arrested relative to one another by means of an anti-rotation system which is **characterized in that** the activated anti-rotation system, prevents mutual rotation of the toothed wheel halves (4, 5) wherein, when said anti-rotation system is activated, the first and the second section (6, 7) of the divided toothing (2) are arranged relative to each other in a flush manner whereas, when the anti-rotation system is not activated, said first and said second section (6, 7) of the divided toothing (2) are arranged to be offset to one another, both sections (6, 7) being tensioned relative to one another by means of a resilient element (8), and the inactive anti-rotation system remaining in the toothed wheel (1) while said toothed wheel is in operation.

2. Toothed wheel (1) according to claim 1, **characterized in that** the anti-rotation system can bee released without being destroyed.

3. Toothed wheel (1) according to claim 1 or 2, **characterized in that** the anti-rotation system can be activated repeatedly.

4. Toothed wheel (1) according to any one of the preceding claims, **characterized in that** the anti-rotation system is a component arranged within the toothed wheel (1), which in a first position blocks a rotary movement and in a second position allows for a rotary movement, said component being under tension at least in the second position.

5. Toothed wheel (1) according to any one of the preceding claims, **characterized in that** the anti-rotation system and the resilient element (8) are formed as one component.

6. Toothed wheel (1) according to any one of the preceding claims, **characterized in that**, for use as a resilient element (8), a leg spring is arranged in the toothed wheel (1), said leg spring serving as an anti-rotation system and as a component tensioning the two toothed wheel halves (6, 7) relative to each other.

7. Toothed wheel (1) according to any one of the preceding claims, **characterized in that** the first and second toothed wheel halves (4, 5) comprise respective guides having arranged in them a movable locking component acting as an anti-rotation system.

8. Toothed wheel (1) according to any one of the preceding claims, **characterized in that** the first and second toothed wheel halves comprise respective guides adapted to be brought into mutual congruence and that the anti-rotation system comprises an angled arm adapted to be inserted into both guides simultaneously and thereby to activate the anti-rotation system.

9. Toothed wheel (1) according to any one of the preceding claims, **characterized in that** the anti-rotation system comprises a displaceable locking pin (12).

10. Method for installation of a divided toothed wheel (1) preferably according to any one of the preceding claims, wherein, for installation, a first and a second toothed wheel half (4, 5) of the divided toothed wheel (1) having respective sections of a divided toothing (2) are locked in a manner preventing relative rotation, and wherein, after installation, a locking arrangement of the two toothed wheel halves (4, 5) is released and the two toothed wheel halves (4, 5) are left in a state of tension toward each other **characterized in** being movable and, after release of the locking arrangement, a component effecting the locked state is left to remain in the toothed wheel (1).

11. Procedure for installation according to claim 10, **characterized in that** the interior of the toothed wheel (1) is accessed from the outside and said component effecting the locked state is displaced, thereby releasing the locking arrangement.

## Revendications

1. Roue dentée (1) comprenant une fonction de compensation d'un jeu de flancs de dents lors d'un engagement par engrènement avec une deuxième roue dentée au moyen d'une denture divisée (2), la roue dentée (1) présentant au moins une division (3) le long de laquelle sont disposées de manière à pouvoir tourner l'une par rapport à l'autre une première moitié de roue dentée (4) avec une première portion (6) de la denture divisée (2) et une deuxième moitié de roue dentée (5) avec une deuxième portion (7) de la denture divisée (2), un blocage des moitiés de roue dentée (4, 5) l'une par rapport à l'autre étant prévu au moyen d'une fixation antirotation, **caractérisée en ce que** la fixation antirotation activée supprime une rotation mutuelle entre les moitiés de roue dentée (4, 5), la première et la deuxième portion (6, 7) de la denture divisée (2), lorsque la fixation antirotation est activée, se prolongeant en affleurement l'une dans l'autre, tandis que dans le cas d'une fixation antirotation non activée, la première et la deuxième portion (6, 7) de la denture divisée (2) sont disposées de manière décalée l'une par rapport à l'autre, les deux portions (6, 7) étant serrées l'une contre l'autre au moyen d'un élément à ressort (8) et la fixation antirotation non activée subsistant dans la roue dentée (1) lors du fonctionnement de la roue dentée.

2. Roue dentée (1) selon la revendication 1, **caractérisée en ce que** la fixation antirotation peut être desserrée sans destruction.

3. Roue dentée (1) selon la revendication 1 ou 2, **caractérisée en ce que** la fixation antirotation peut être activée de manière répétée.

4. Roue dentée (1) selon l'une quelconque des revendications précédentes, **caractérisée en ce que** la fixation antirotation est un composant disposé dans la roue dentée (1) qui bloque une rotation dans une première position et qui, dans une deuxième position, permet une rotation, le composant étant sous contrainte au moins dans la deuxième position.

5. Roue dentée (1) selon l'une quelconque des revendications précédentes, **caractérisée en ce que** la fixation antirotation et l'élément à ressort (8) constituent un composant.

6. Roue dentée (1) selon l'une quelconque des revendications précédentes, **caractérisée en ce qu'**un ressort à branches est disposé en tant qu'élément à ressort (8) dans la roue dentée (1), lequel sert de fixation antirotation ainsi que de composant serrant l'une contre l'autre les deux moitiés de roues dentées (6, 7).

7. Roue dentée (1) selon l'une quelconque des revendications précédentes, **caractérisée en ce que** la première et la deuxième moitié de roue dentée (4, 5) présentent chacune un guidage, pouvant être amené en coïncidence, dans lequel est inséré un composant de blocage disposé mobile, qui sert de fixation antirotation.

8. Roue dentée (1) selon l'une quelconque des revendications précédentes, **caractérisée en ce que** la première et la deuxième moitié de roue dentée présentent chacune un guidage, les guidages pouvant être amenés en coïncidence, la fixation antirotation présente un bras coudé qui peut être inséré simultanément dans les deux guidages, et qui active de ce fait la fixation antirotation.

9. Roue dentée (1) selon l'une quelconque des revendications précédentes, **caractérisée en ce que** la fixation antirotation comprend un boulon de verrouillage déplaçable (12).

10. Procédé d'installation d'une roue dentée divisée (1), de préférence selon l'une quelconque des revendications précédentes, dans lequel, pour l'installation, une première et une deuxième moitié de roue dentée (4, 5) de la roue dentée divisée (1) sont bloquées l'une par rapport à l'autre de manière solidaire en rotation avec des portions respectives d'une denture divisée (2), après l'installation, un blocage des deux moitiés de roue dentée (4, 5) est desserré et les deux moitiés de roue dentée (4, 5) sont sous contrainte de manière déplaçable l'une par rapport à l'autre, **caractérisé en ce qu'**un composant provoquant le blocage subsiste dans la roue dentée (1) après le desserrage du blocage.

11. Procédé pour l'installation selon la revendication 10, **caractérisé en ce que** l'on intervient depuis l'extérieur dans la roue dentée (1), et le composant provoquant le blocage est décalé et de ce fait le blocage est desserré.
